# EUROPEAN PATENT SPECIFICATION

(11) **EP 2 921 392 B1**
(45) Date of publication and mention of the grant of the patent: **31.08.2016**
(21) Application number: 15156852.4
(22) Date of filing: 27.02.2015
(51) Int. Cl.: B62K 19/46

(54) **Motorcycle Storage box**
Motorrad mit Kofferraum
Motocyclette avec stockage

(30) Priority: 19.03.2014 JP 2014057190
(43) Date of publication of application: 23.09.2015
(73) Proprietor: HONDA MOTOR CO., LTD., Tokyo, 107-8556 (JP)
(72) Inventor: Horiuchi, Tetsu, Saitama, 351-0193 (JP); Suzuki, Kazuhiro, Saitama, 351-0193 (JP); Yamamoto, Kanta, Saitama, 351-0193 (JP)
(74) Representative: Beder, Jens

(56) References cited:
- EP-A1- 2 128 006
- CN-A- 1 195 628
- CN-A- 1 478 692
- JP-A- 2001 287 678
- US-A1- 2003 112 633

## Description

The present invention relates to improvement in a motorcycle including a storage box.

There is known a motorcycle including a storage box below the seat (see Japanese Patent Application Publication No. 2001-287678 (FIGS. 1, 3, 5) for example, which is considered the closest prior art and discloses all of the features of the preamble of claim 1).

As shown in FIGS. 1, 3, and 5 of Japanese Patent Application Publication No. 2001-287678, a scooter type vehicle "1" (the quoted number indicates a reference numeral used in Japanese Patent Application Publication No. 2001-287678. The same shall apply hereinafter.) includes a storage compartment "34" supported by a body frame "2" below a seat "28," and side storage compartments "35L, 35R," which bulge toward outer sides of the body frame "2" on outer sides of the storage compartment "34" in the vehicle width direction, and extend toward the inner side below the body frame "2."

In the technique of Japanese Patent Application Publication No. 2001-287678, the side storage compartments "35L, 35R" are formed of a rear body "27" made of synthetic resin. The vehicle width is enlarged and expanded at the side storage compartments "35L, 35R" part, in order to ensure a larger storage space of the storage compartment "34" positioned below the seat "28."

There is a need for a motorcycle including a storage box that can enlarge storage space while suppressing expansion in the vehicle width.

An objective of the present invention is to provide a motorcycle including a storage box that can enlarge storage space while suppressing expansion in the vehicle width.

An invention according to claim 1 is a motorcycle including: paired left and right rear frames; a storage box supported by the paired left and right rear frames and storing articles; a seat provided above the storage box and on which any of a rider and a passenger sits; and a rear side body cover covering sides of the vehicle body below the seat, characterized in that: the storage box includes a first storage portion provided between the paired left and right rear frames, and a second storage portion provided so as to bulge toward the outside of the rear frame in the vehicle width direction from the first storage portion, and communicating into the first storage portion; the first storage portion and an upper face of the second storage portion are formed of a first member; a side face and a bottom face of the second storage portion are formed of a second member; the second member includes a hanging portion hanging outside the rear frame; and the first member and the second member are vertically engaged with each other in the height direction.

An invention according to claim 2 is characterized in that at least a part of the bottom face of the second storage portion abuts on the rear frame.

An invention according to claim 3 is characterized in that the side face of the second storage portion is arranged so as to follow the shape of the rear side body cover.

An invention according to claim 4 is characterized in that: the storage box includes an annular sealing face on which the seat is placed in side view of the vehicle; and at least a part of the bottom face of the second storage portion extends to the inside of the sealing face.

An invention according to claim 5 is characterized in that a seat locking cable guide portion for guiding a seat locking cable connected to a seat locking mechanism is provided in the storage box.

An invention according to claim 6 is characterized in that a hook portion extending upward from the second member is provided in the second storage portion.

An invention according to claim 7 is characterized in that pillion steps attached to the rear frames and on which the passenger is able to place his/her feet are arranged at the vehicle front of the second storage portion.

In the invention according to claim 1, the storage box includes the first storage portion provided between the rear frames, and the second storage portion provided so as to bulge toward the outside in the vehicle width direction from the first storage portion. The first storage portion and the upper face of the second storage portion are formed of the first member, whereas the side face and the bottom face of the second storage portion are formed of the second member. The first member and the second member are vertically engaged with each other and constitute the storage box. In other words, the second storage portion is formed of divided upper and lower portions, which are the first member and the second member. Moreover, the hanging portion hanging down toward the lower part of the rear frame is provided in the second member, outside the rear frame in the vehicle width direction.

By configuring the first storage portion and the second storage portion by combining two members, which are the first member and the second member, as well as providing the hanging portion in the second member, the space outside the rear frame in the vehicle width direction can be utilized effectively as storage space.

In the invention according to claim 2, at least a part of the bottom face of the second storage portion abuts on the rear frame. That is, since a part of the bottom face of the second storage portion is supported by the rear frame, heavy goods can be mounted in the second storage portion. As a result, loading capacity can be improved.

In the invention according to claim 3, the side face of the second storage portion is arranged so as to follow the shape of the rear side body cover. With this, the second storage portion can be arranged as close as possible to the rear side body cover. Consequently, storage space can be enlarged without expanding the vehicle body in the vehicle width direction.

In the invention according to claim 4, the second member constituting the bottom face of the second storage portion extends to the inside of the sealing face. Specifically, the second member is attached so as to dig into the first member constituting the first storage portion. Accordingly, rigidity of the second member can be enhanced as compared to a structure where the second member is simply attached from the side of the first member. Enhanced rigidity of the second member allows heavy goods to be mounted in the second storage portion. Consequently, loading capacity can be improved even more.

In the invention according to claim 5, the seat locking cable guide portion for guiding the seat locking cable is disposed on the upper face of the second storage portion. To be specific, the seat locking cable guide portion is disposed between the upper face of the second storage portion and the rear side body cover, whereby the space between the upper face of the second storage portion and the rear side body cover can be utilized effectively.

In the invention according to claim 6, the upper face of the second storage portion is formed of the first member, whereas the side face and the bottom face of the second storage portion are formed of the second member, and the hook portion extending upward is provided in the second member. In other words, the hook portion is provided in the second storage portion divided into upper and lower parts. Articles stored in the second storage portion can be fixed by the hook portion. Consequently, loading capacity can be improved.

In the invention according to claim 7, the pillion steps are arranged at the vehicle front of the second storage portion. Specifically, the second storage portion is arranged in a position not interfering with the foot of the passenger, and thus the second storage portion can be enlarged while maintaining comfort of the passenger. As a result, storage space of the storage portion can be enlarged without expanding the vehicle width.
FIG. 1 is a left side view of a motorcycle according to the present invention.
FIG. 2 is a left side view for describing the structure of a screen supporting portion.
FIG. 3 is a view on arrow 3 of FIG. 1.
FIG. 4 is a cross-sectional view taken along line 4-4 of FIG. 3.
FIG. 5 is a cross-sectional view taken along line 5-5 of FIG. 3.
FIG. 6 is a view for explaining an effect when a screen is in an uppermost sliding position.
FIG. 7 is a view for explaining an effect when the screen is in a lowermost sliding position.
FIG. 8 is a view for explaining an effect that the screen height is adjustable.
FIG. 9 is a perspective view of a front portion of the vehicle describing visor openings.
FIG. 10 is a view on arrow 10 of FIG. 1.
FIG. 11 is a view for describing a screen supporting structure according to a modified example and its effect.
FIG. 12 is a view on arrow 12 of FIG. 1.
FIG. 13 is a perspective view of a fuel lid and peripheral parts.
FIG. 14 is a view where the fuel lid and a seat are detached from the state in FIG. 12.
FIG. 15 is a cross-sectional view taken along line 15-15 of FIG. 12.
FIG. 16 is a cross-sectional view taken along line 16-16 of FIG. 12.
FIG. 17 is a cross-sectional view taken along line 17-17 of FIG. 15.
FIG. 18 is a cross-sectional view taken along line 18-18 of FIG. 15.
FIG. 19 is a plan view of the vehicle showing a fuel tray.
FIG. 20 is a left side view of the vehicle showing the fuel tray.
FIG. 21 is a left side view of a rear portion of the motorcycle according to the present invention.
FIG. 22 is a cross-sectional view taken along line 22-22 of FIG. 21.
FIG. 23 is an enlarged view of part 23 of FIG. 22.
FIG. 24 is a cross-sectional view taken along line 24-24 of FIG. 21.
FIG. 25 is an enlarged view of part 25 of FIG. 24.
FIG. 26 is an exploded perspective view of a storage box.
FIG. 27 is a cross-sectional view of a side portion of the storage box for describing a mudguard rib.
FIG. 28 is a plan view of the storage box having detachable partition plates.

Hereinafter, an embodiment of the present invention will be described in detail. In the drawings and the example, directions such as "upper," "lower," "front," "rear," "left," and "right" are those seen from a rider of a motorcycle.

An example of the present invention will be described with reference to the drawings.

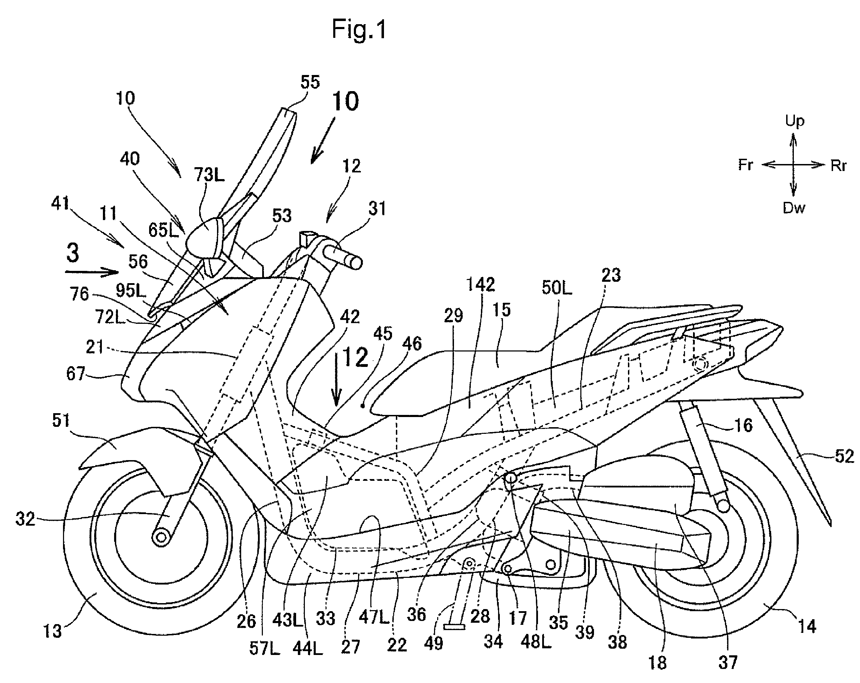

As shown in FIG. 1, a motorcycle 10 is a straddle type vehicle that includes: a body frame 11; a front wheel steering portion 12 steerably supported by a front portion of the body frame 11 and including a front wheel 13; a seat 15 supported by the body frame 11 and on which a rider sits; a pivot shaft 17 provided in the body frame 11 in a position below the seat 15; a power unit 18 extending toward the vehicle rear from the pivot shaft 17, and serving as a power source as well as a swing arm; a rear wheel 14 attached to a rear end portion of the power unit 18; and a cushion unit 16 bridged across the rear end of the power unit 18 and the body frame 11, and that is ridden by the rider straddling a front portion of the seat 15 and ridden by a passenger straddling a rear portion of the seat 15.

The body frame 11 has: a head pipe 21; a main frame portion 22 extending toward the vehicle rear from the head pipe 21; and rear frames 23 connected to and supported by the rear end of the main frame portion 22, and extending obliquely upward in the rear direction of the vehicle. The main frame portion 22 consists of an obliquely downwardly-extending portion 26 extending obliquely downward in the rear direction of the vehicle, a horizontal portion 27 extending horizontally toward the vehicle rear from the obliquely downwardly-extending portion 26, and an obliquely upwardly-extending portion 28 extending obliquely upward in the rear direction of the vehicle from the rear end of the horizontal portion 27. An upper frame 29 that extends toward the vehicle rear from the obliquely downwardly-extending portion 26 and then extends obliquely downward in the rear direction of the vehicle is bridged across the obliquely downwardly-extending portion 26 and the horizontal portion 27. The rear frames 23 that support the seat 15 extend obliquely upward in the rear direction from rear portions of the upper frame 29.

Main elements of the front wheel steering portion 12 are: a handle 31 rotatably supported by the head pipe 21 and steered by the rider, a front fork 32 provided integrally with the handle 31 and extending obliquely downward in the front direction of the vehicle, and the front wheel 13 attached to the lower end of the front fork 32.

A fuel tank 33 is arranged so as to be surrounded by the main frame portion 22 and the upper frame 29 in the front lower direction of the seat 15 on which the rider sits. Main elements of the power unit 18, which is arranged behind the fuel tank 33, are: a unit case portion 35, a cylinder portion 36 extending toward the vehicle front from the unit case portion 35, an air cleaner unit 37 attached to an upper face of the unit case portion 35, a connecting tube 38 extending from the air cleaner unit 37, and a throttle body 39 jointed to the tip of the connecting tube 38. The throttle body 39 is connected to the cylinder portion 36. In FIG. 1, reference numeral 34 indicates an exhaust pipe 34 extending from the cylinder portion 36.

Next, a body cover will be described.

Main elements of a body cover 40 are: a front cover portion 41 covering the periphery of the front wheel steering portion 12, an inner panel 42 covering a rear face of the front cover portion 41, left and right side body covers 43L, 43R (only reference numeral 43L on the near side in FIG. 1 is shown) extending toward the vehicle rear so as to be continuous with the inner panel 42 to cover sides of the vehicle body, left and right lower side body covers 57L, 57R (only reference numeral 57L on the near side in FIG. 1 is shown) provided below the left and right side body covers 43L, 43R, left and right under covers 44L, 44R (only reference numeral 44L on the near side in FIG. 1 is shown) provided below the left and right lower side body covers 57L, 57R, and left and right rear side body covers 50L, 50R (only reference numeral 50L on the near side in FIG. 1 is shown) provided so as to be continuous with rear portions of the left and right side body covers 43L, 43R.

A center cover 45 is bridged across the left and right side body covers 43L, 43R. A straddle space 46, which is formed into a substantial U shape opened upward in side view of the vehicle and can be straddled by moving the leg thereover when mounting and dismounting, is formed by the inner panel 42, the left and right side body covers 43L, 43R, and the center cover 45, between the seat 15 and the handle 31.

Foot rest portions 47L, 47R (only reference numeral 47L on the near side in FIG. 1 is shown) on which the rider places his/her feet are formed in the under covers 44L, 44R. Pillion steps 48L, 48R (only reference numeral 48L on the near side in FIG. 1 is shown) on which a passenger places his/her feet are provided in the body frame 11 in upper positions behind the foot rest portions 47L, 47R. A side stand 49 is attached to the main frame portion 22. The fuel tank 33 is provided so as to be surrounded by the main frame portion 22 and the upper frame 29 below the center cover 45.

A front fender 51 covering an upper part of the front wheel 13 to shield mud splashed from the front wheel 13 is attached to the front fork 32, and a rear fender 52 covering upper and diagonally upper rear parts of the rear wheel 14 to shield mud splashed from the rear wheel 14 is attached to the rear frames 23.

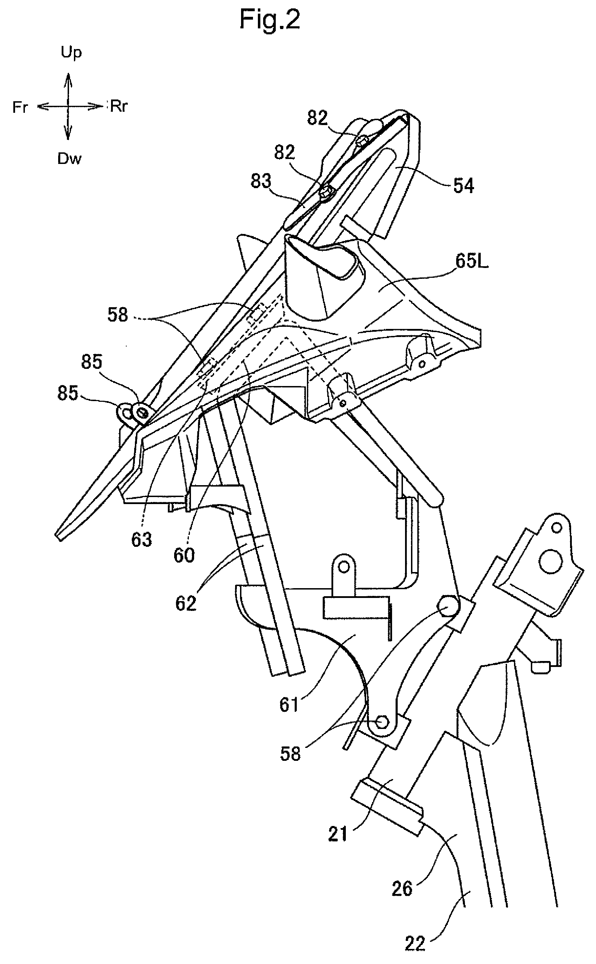

A meter unit 53 is arranged above the front cover portion 41, in front of the handle 31, and in front of the seat 15 on which the rider sits, while a screen 55 for shielding traveling wind directed to the rider is arranged in front of the meter unit 53. A front portion of the meter unit 53 is covered with a meter panel 54 (see FIG. 2), and a visor 56 for shielding solar radiation directed to meter equipment including the meter unit 53, is arranged at the vehicle front of the meter panel 54 and the vehicle front of the screen 55.

Next, a supporting structure and the like of the screen and meter panel will be described.

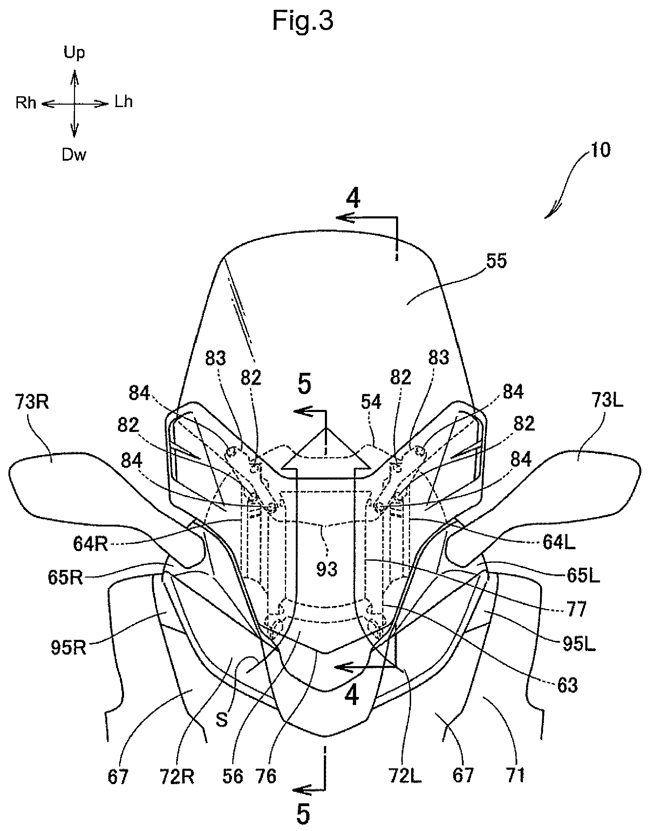

As shown in FIG. 2, a first stay 61 formed by processing a plate member extends toward the vehicle front through fastening screws 58 from the front end of the head pipe 21, a pipe-shaped second stay 62 is joined to the first stay 61 and extends in the front upper direction of the vehicle, a third stay 60 formed by processing a plate member and joined to the second stay 62 extends, and a rail stay 63 is attached to the third stay 60 through the fastening screws 58. The rail stay 63 is provided integrally with later-mentioned rails 64L, 64R (see FIG. 3) in the third stay 60. Left and right mirror covers 65L, 65R (only reference numeral 65L on the near side in FIG. 1 is shown) and the meter panel 54, which is a constituent element of a front portion of the meter unit 53 (see FIG. 1) as meter equipment, are fastened to the second stay 62.

Next, a front structure of the vehicle as seen from the vehicle front will be described.

As shown in FIG. 3, a headlight 67 is arranged at the front end of the vehicle, a part below the headlight 67 is covered with a front cover 71, parts above the headlight 67 are covered with garnishes 72L, 72R, the left and right mirror covers 65L, 65R, which cover support portions of mirrors 73L, 73R for checking the rear, are provided in the upper left and right of the garnishes 72L, 72R in the vehicle width direction so as to be continuous with the garnishes 72L, 72R, and the left and right mirrors 73L, 73R are arranged above the left and right mirror covers 65L, 65R so as to be continuous therewith.

The visor 56 for shielding solar radiation directed to meter equipment is disposed between the left and right mirror covers 65L, 65R, while extending upward in such a manner as to be continuous with the left and right mirror covers 65L, 65R. The screen 55 for shielding traveling wind directed to the rider extends upward in such a manner as to overlap the vehicle rear side of the visor 56. The screen 55 is slidably supported by the paired left and right rails 64L, 64R.

An air intake 76 for taking in traveling wind is formed between the left and right mirror covers 65L, 65R, and between the meter panel 54 and the screen 55 arranged in front of the meter panel 54. A duct 77 for introducing traveling wind to a rear side 55b of the screen 55 is arranged between the paired left and right rails 64L, 64R, which are arranged narrower than the air intake 76 and support the screen 55 in a vertically slidable manner. In FIG. 3, arrow S indicates traveling wind flowing through the duct 77.

The visor 56 overlaps the duct 77 and the rails 64L, 64R (also referred to as "rail 64" below) in front view of the vehicle, and is made of a member less transmissive than the screen 55.

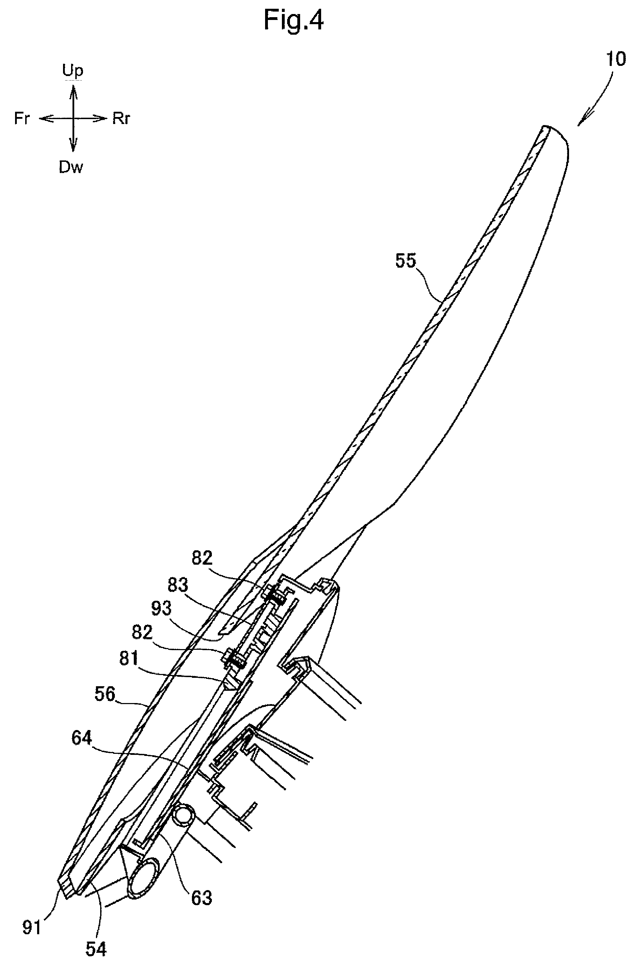

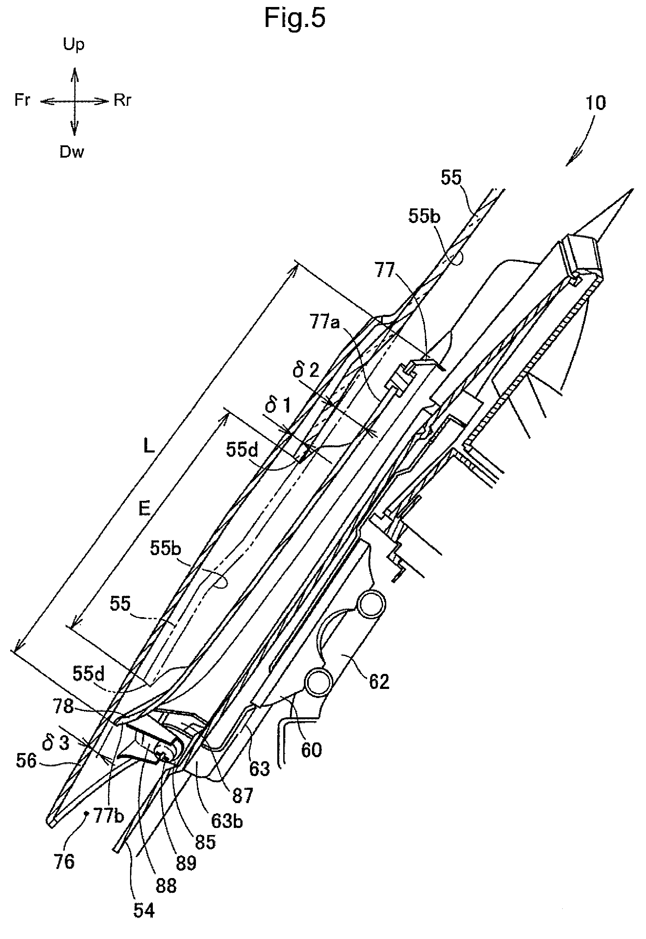

Details of the screen and peripheral parts will be described with reference to the following FIGS. 4 and 5.

As shown in FIG. 4, the rail 64 is arranged integrally with the rail stay 63 close to the front of the meter panel 54, a slider 81 is arranged so as to be slidable along the rail 64, and a screen stay 83 is attached to the slider 81 through screws 82.

Referring back to FIG. 3, the screen stays 83, 83 are arranged in an inverted V-shape opened upward in front view of the vehicle, and each has the screen 55 attached thereto through screw members 84 at upper and lower ends. This configuration allows the screen 55 to slide vertically on the rails 64 provided on the head pipe 21 side.

Referring back to FIG. 4, the meter panel 54 is provided in a lower part of the screen 55, and rails 64 allowing the screen 55 to slide vertically are arranged close to the front of the meter panel 54. The rails 64 are arranged so as to incline from the lower front toward the upper rear along the meter panel 54, and the visor 56 covers the vehicle front of the screen 55.

Next, a positional relation and the like among the meter panel, the duct, the screen, and the visor will be described.

As shown in FIG. 5, a front portion of the motorcycle 10 includes: the screen 55 provided at the vehicle front of the meter panel 54 to avoid traveling wind, and the visor 56 provided at the vehicle front of the screen 55 and covers the front portion of the vehicle.

The visor 56 is arranged higher than the meter panel 54 to thereby form the air intake 76 capable of taking in traveling wind between the visor 56 and the meter panel 54. The duct 77, which extends to the rear side 55b of the screen 55 from the air intake 76 and has a smaller flow path area than the opening area of the air intake 76, is provided at the vehicle rear of the visor 56, so that the duct 77 can introduce traveling wind to the rear side 55b of the screen 55. A curved portion 78 curved so as to come closer to the visor 56 as it approaches the air intake 76 is provided in a lower end 77b of the duct 77.

Next, an attachment structure of lower portions of the visor 56 and the duct 77 will be described.

A stay mounting eye 85 is fixed on a lower end 63b of the rail stay 63, a duct mounting eye 87 fixed on the duct 77 and having a female screw portion is brought into contact with the stay mounting eye 85 from outside in the vehicle width direction, while a visor mounting eye 88 formed in the visor 56 is brought into contact with the stay mounting eye from inside in the vehicle width direction. The duct 77 and the visor 56 are tightened together in such a manner as to sandwich the stay mounting eye 85, with a male screw 89 inserted from the inside to outside in the vehicle width direction. With this configuration, the number of parts can be reduced as compared to a case of providing mounting eyes separately.

Next, a description is given of a screen supporting structure and the like when the sliders are positioned at the upper end of the rails.

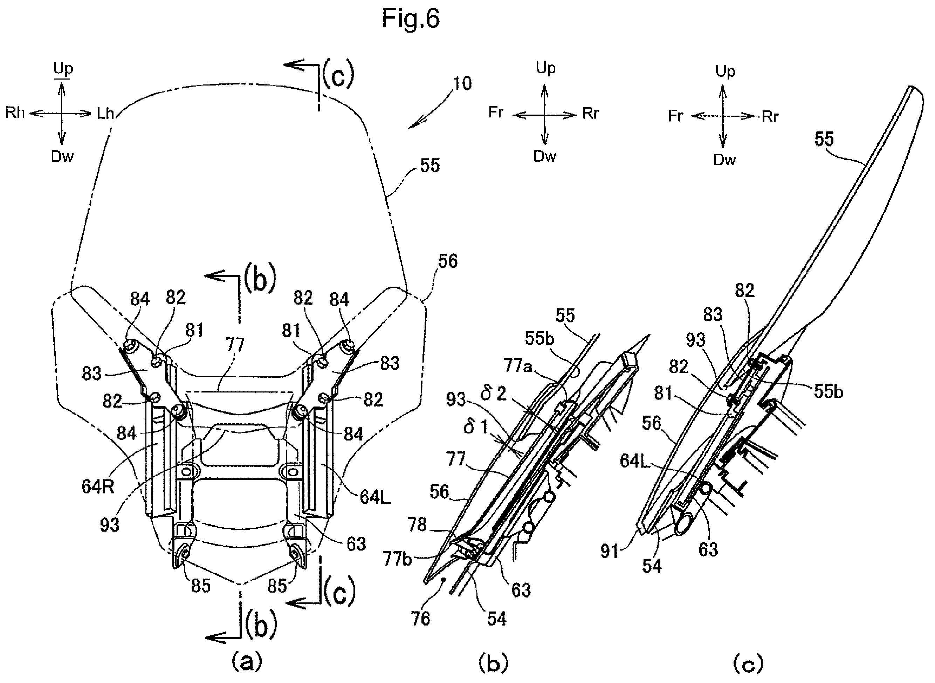

FIG. 6(a) is a front view showing the sliders 81 positioned at the upper end of the rails 64, FIG. 6(b) is a cross-sectional view taken along line (b)-(b) of FIG. 6(a), and FIG. 6(c) is a cross-sectional view taken along line (c)-(c) of FIG. 6(a). In FIG. 6(a), the screen 55, the visor 56, and the duct 77 are shown in an imaginary line.

As shown in FIG. 6(a), when the sliders 81, 81 are positioned at the upper end of the rails 64, the screen 55 moving integrally with the sliders 81, 81 is in an upper end position in the height direction. At this time, the sliders 81, 81 are fixed with unillustrated fixing means.

As shown in FIG. 6(b), when the right side of the vehicle is viewed from the center in the vehicle width direction, the air intake 76 is formed between the meter panel 54 and the visor 56, while the duct 77 is provided above the air intake 76 and the curved portion 78 curving so as to come closer to the visor 56 is provided in the duct 77. The screen 55 is arranged between the duct 77 and the visor 56. A gap δ1 is formed between the visor 56 and the screen 55, and a gap δ2 is formed between the screen 55 and the duct 77. At this time, since the screen 55 is arranged closer to the visor 56 side than to the duct 77 side, the magnitude correlation between the gaps is δ1<δ2.

Traveling wind taken in from the air intake 76 enters the duct 77, and after exiting the duct 77, is introduced to the rear side 55b of the screen 55. Meanwhile, traveling wind that did not enter the duct 77 passes through between the duct 77 and the visor 56, and enters the gap δ1 formed between the visor 56 and the screen 55 or the gap δ2 formed between the screen 55 and the duct 77. At this time, since the gap δ2 is larger than the gap δ1, most of the traveling wind is introduced to the rear side 55b of the screen 55.

As shown in FIG. 6(c), at a position in the vicinity of the rails in the vehicle width direction, a bent portion 91 bent so as to abut on the surface of the meter panel 54 is formed on the lower end of the visor 56. Accordingly, traveling wind is hardly introduced to the rear side of the visor 56, in the vicinity of the rails.

Next, a description is given of the screen supporting structure and the like when the sliders are positioned at the lower end of the rails.

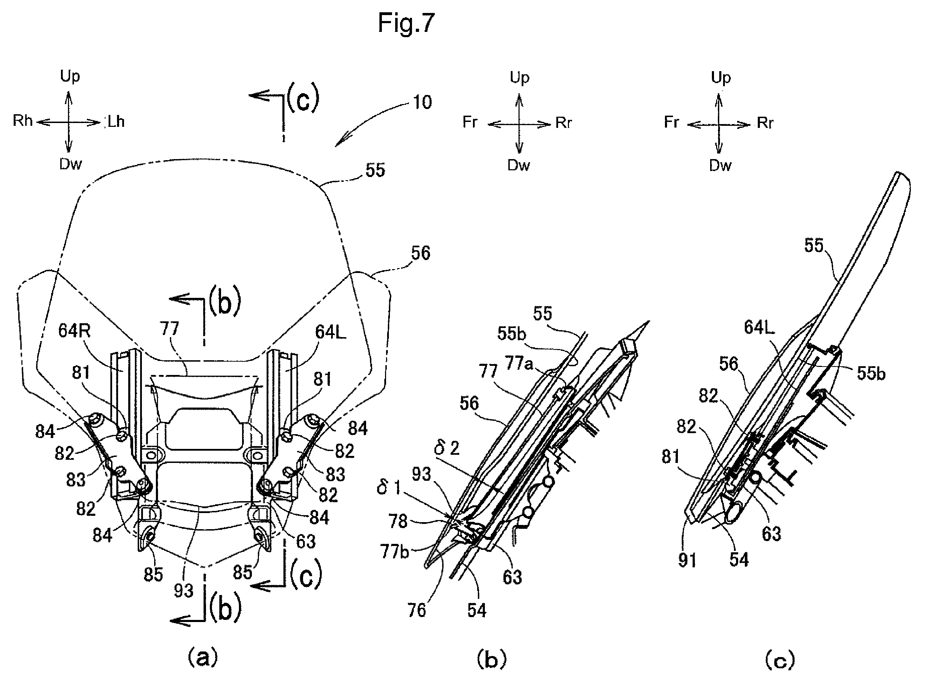

FIG. 7(a) is a front view showing the sliders 81 positioned at the lower end of the rails 64, FIG. 7(b) is a cross-sectional view taken along line (b)-(b) of FIG. 7(a), and FIG. 7(c) is a cross-sectional view taken along line (c)-(c) of FIG. 7(a). In FIG. 7(a), the screen 55, the visor 56, and the duct 77 are shown in an imaginary line.

As shown in FIG. 7(a), when the sliders 81, 81 are positioned at the lower end of the rails 64, the screen 55 moving integrally with the sliders 81, 81 is in a lower end position in the height direction. At this time, the sliders 81, 81 are fixed with unillustrated fixing means.

As shown in FIG. 7(b), when the right side of the vehicle is viewed from the center in the vehicle width direction as in FIG. 6(b), the air intake 76 is formed between the meter panel 54 and the visor 56, while the duct 77 is provided above the air intake 76 and the curved portion 78 is provided in the duct 77. The screen 55 is arranged between the duct 77 and the visor 56. The gap δ1 is formed between the visor 56 and the screen 55, and the gap δ2 is formed between the screen 55 and the duct 77. At this time, since the screen 55 is arranged close to the visor 56 side, the magnitude correlation between the gaps is δ1<δ2. Note that in FIGS. 6 and 7, the gaps δ1 and δ2 formed when the sliders 81 are positioned at the upper end of the rail 64 do not completely coincide with the gaps δ1 and δ2 formed when the sliders 81 are positioned at the lower end of the rail 64, but differ slightly.

Referring back to FIG. 5, a length L of the duct 77 overlaps a movable range E in which a lower end 55d of the screen 55 slides, and is longer than the movable range E.

Referring back to FIG. 7(b), traveling wind taken in from the air intake 76 enters the duct 77, and after exiting the duct 77, is introduced to the rear side 55b of the screen 55 since the length of the duct 77 is longer than the sliding range of the screen 55. Meanwhile, traveling wind that did not enter the duct 77 passes through between the duct 77 and the visor 56, and enters the gap δ1 formed between the visor 56 and the screen 55 or the gap δ2 formed between the screen 55 and the duct 77. At this time, since the gap δ2 is larger than the gap δ1, most of the traveling wind is introduced to the rear side 55b of the screen 55.

As shown in FIG. 7(c), as in FIG. 6(c), at a position in the vicinity of the rails in the vehicle width direction, the bent portion 91 bent toward the surface of the meter panel 54 is formed on the lower end of the visor 56. Accordingly, traveling wind is hardly introduced to the rear side of the visor 56, in the vicinity of the rails.

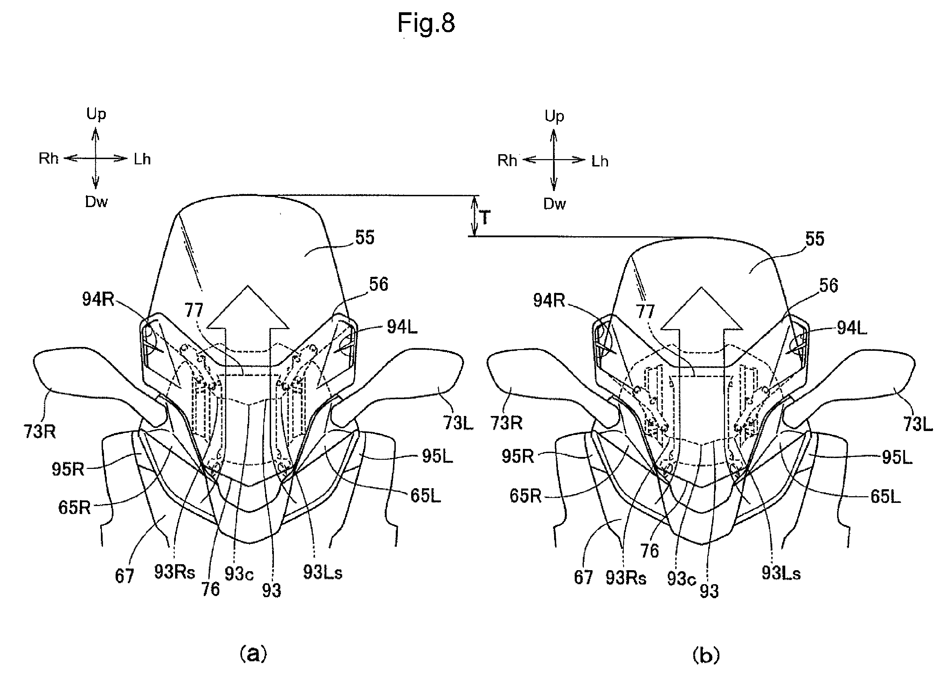

FIG. 8(a) is a front view of an upper portion of the vehicle when the screen is in the upper end position, and FIG. 8(b) is a front view of the upper portion of the vehicle when the screen is in the lower end position.

Referring to both of FIGS. 8(a) and 8(b), the screen 55 can be moved for a length T in the height direction. A lower edge 93 of the screen 55 has a center portion 93c in the vehicle width direction that extends further in the front lower direction than its both end portions 93Ls, 93Rs. In addition, the lower edge 93 of the screen 55 is formed so as to follow the shapes of the mirror covers 65L, 65R, which are provided on sides of the meter panel 54 and cover the support portions of the left and right mirrors 73L, 73R.

Next, visor openings and the like provided in upper side portions of the visor in the vehicle width direction will be described.

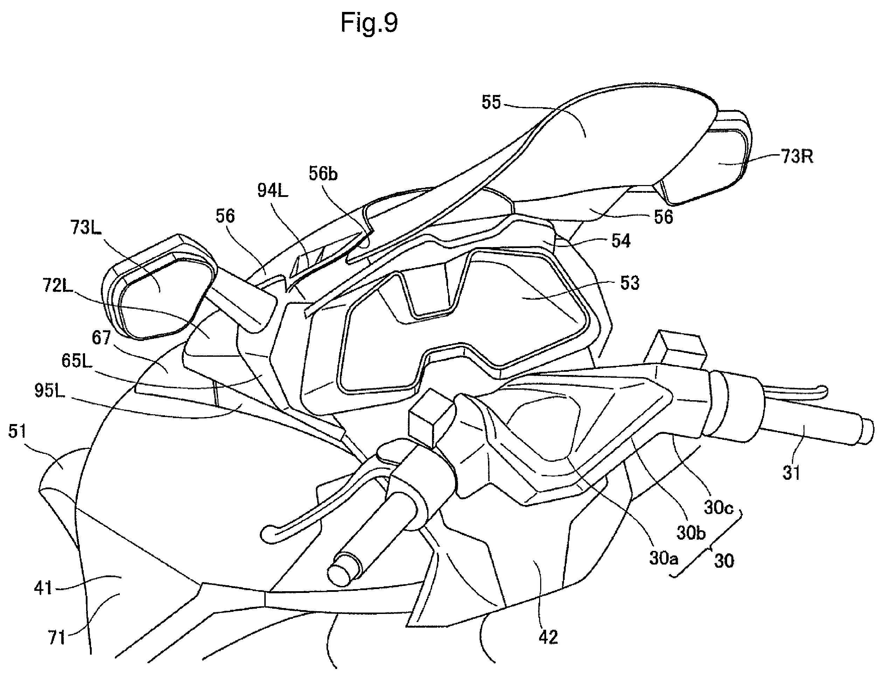

As shown in FIGS. 8 and 9, left and right visor openings 94L, 94R for introducing traveling wind to the rear side 56b of the visor 56 are provided in upper side portions of the visor 56 in the vehicle width direction. The left and right visor openings 94L, 94R are arranged behind the left and right mirrors 73L, 73R, respectively. Since these left and right visor openings 94L, 94R enable appropriate amount of traveling wind to be fed on the arm portion of the rider, clothing on the arms of the rider is less likely to flap while traveling.

Additionally, left and right sub covers 95L, 95R, which have similar appearances as the headlight 67, are provided so as to be continuous with both ends of the headlight 67 in the vehicle width direction, and extend to the vehicle rear of the meter panel 54. The left and right sub covers 95L, 95R can make the headlight 67 appear larger, and the front portion of the vehicle can have characteristic and unique appearance.

Meanwhile, the handle 31 is covered with a handle cover 30 consisting of a combination of three cover pieces 30a, 30b, 30c.

Next, a positional relation and the like between the meter panel and the rails will be described.

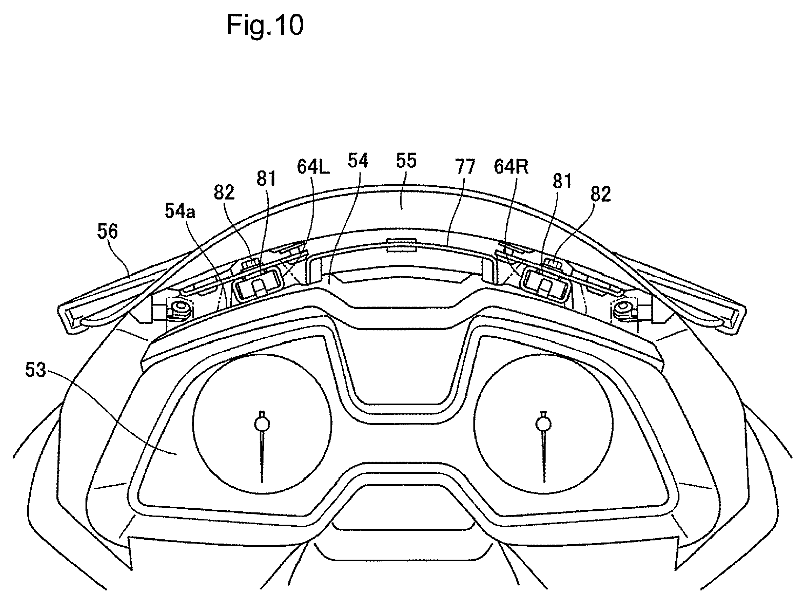

As shown in FIG. 10, when the screen 55 is viewed from above along the longitudinal axis direction of the head pipe 21 (see FIG. 1), the left and right rails 64L, 64R extend vertically in the sliding direction of the sliders 81 arranged along a front face 54a of the meter panel 54, which protrudes slightly toward the vehicle front. The visor 56 is provided so as to cover the front of the screen 55. In FIG. 10, parts of the meter panel 54 where it covers the left and right rails 64L, 64R from above are omitted, to clarify the arrangement of the left and right rails.

Next, a modified example of the above example will be described.

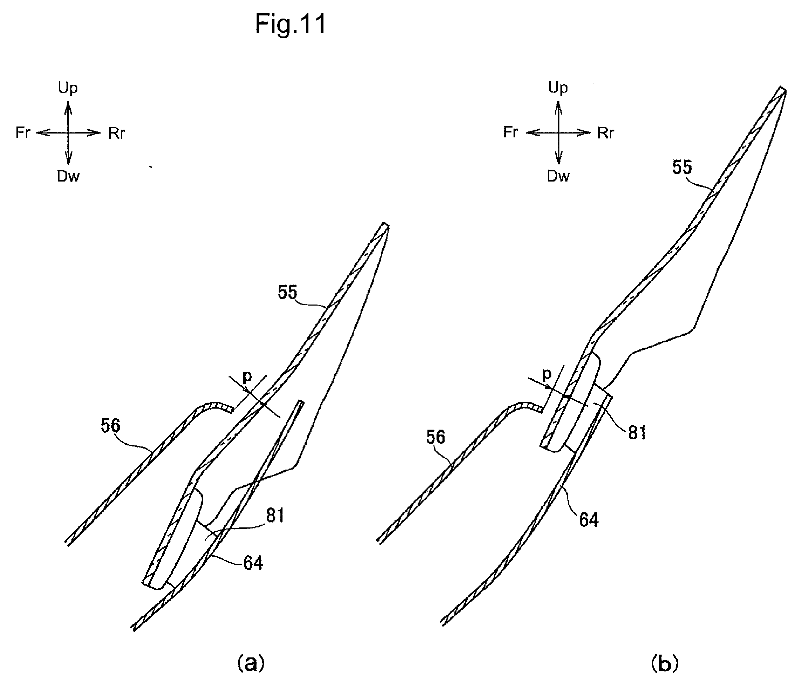

FIG. 11(a) explains a positional relation between the screen and the visor when the screen is positioned at the lower end, and FIG. 11(b) explains a positional relation between the screen and the visor when the screen is positioned at the upper end.

As shown in FIGS. 11(a) and 11(b), in order to keep a gap p between the screen 55 and the visor 56 constant, the rail 64 is curved at a predetermined curvature and protrudes downward, and the screen 55 is curved at a predetermined curvature and protrudes upward. With this configuration, the amount of wind flowing through between the screen 55 and the visor 56 hardly varies when the screen 55 is slid along the rails 64. Accordingly, variation in steerability of the vehicle can be suppressed even more.

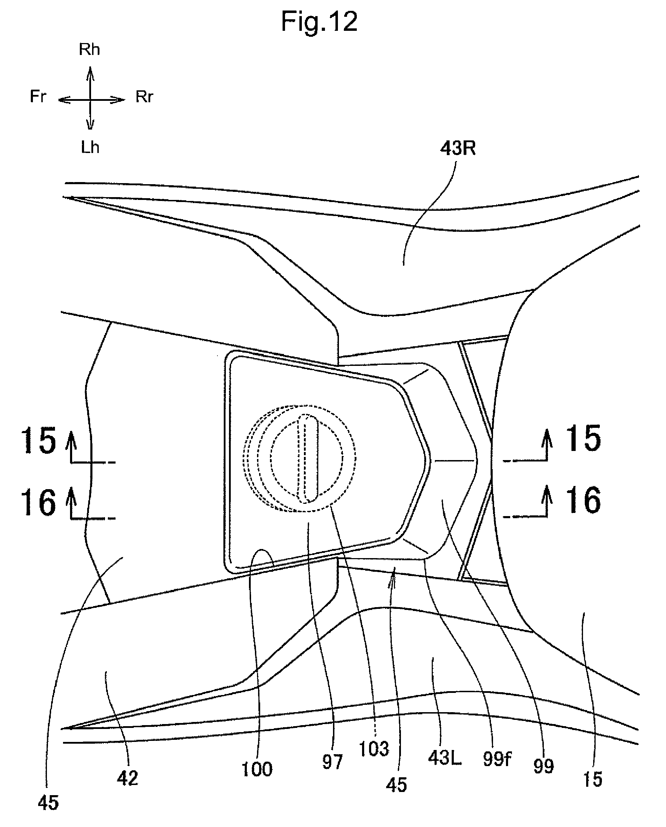

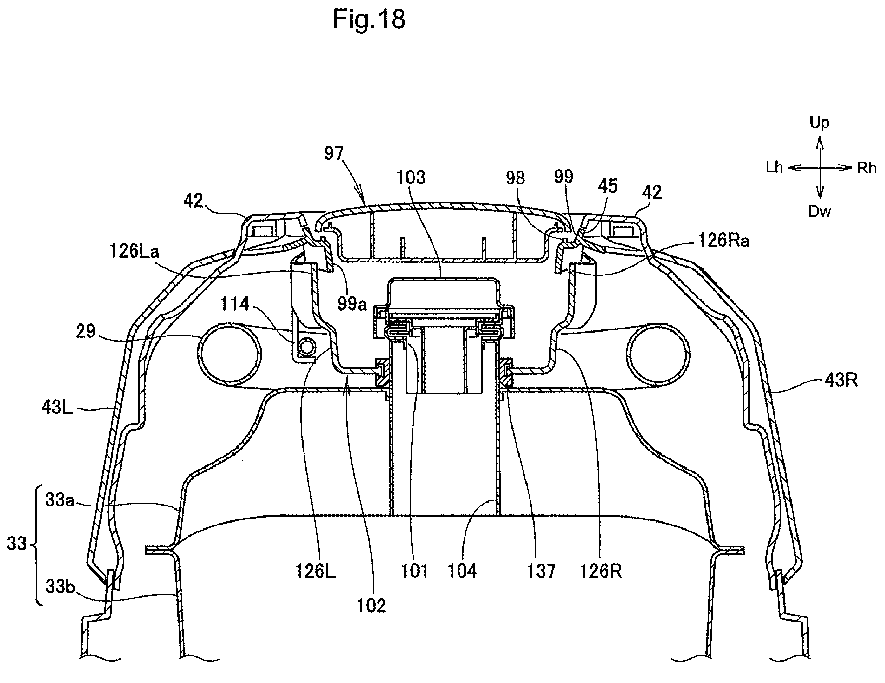

A fuel lid and peripheral parts arranged in the straddling portion will be described with reference to the following FIGS. 12 to 19.

FIG. 12 is a plan view. As shown in FIG. 12, the straddle space 46, which is positioned in front of the seat 15 and over which the rider can move his/her leg when mounting and dismounting, is configured of: the inner panel 42, the left and right side body covers 43L, 43R provided so as to be continuous with the rear ends of the inner panel 42, the center cover 45 bridged across the left and right side body covers 43L, 43R, and a fuel lid 97 openably attached to the center cover 45 so as to be surrounded by the center cover 45.

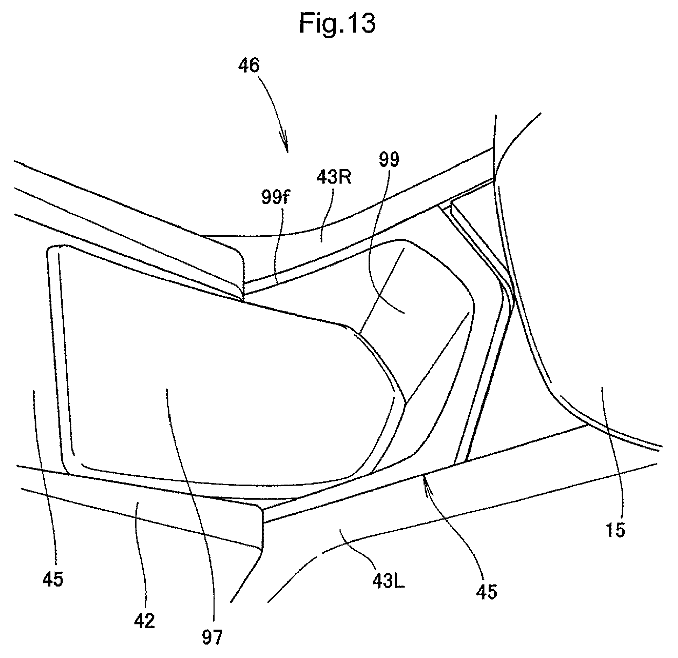

As shown in FIG. 13, a concave portion 99 depressed downward is provided in a center portion of the center cover 45 in the vehicle width direction. The inner panel 42 extends downward toward the center cover 45, in such a manner as to be connected with an outer edge 99f of the concave portion 99. The fuel lid 97 is arranged such that it can be accommodated in the concave portion 99 in a closed state.

The fuel lid 97 is arranged such that it can be accommodated in the concave portion 99 in a closed state. Specifically, since the fuel lid 97 is provided in a position lower than the side body covers 43L, 43R or the inner panel 42, a structure can be achieved where the leg of the rider is less likely to hit the fuel lid 97 when he/she moves it over the straddle space 46. Hence, the fuel lid 97 can be protected.

Next, a fuel cap and peripheral parts that can be viewed when the fuel lid is detached will be described.

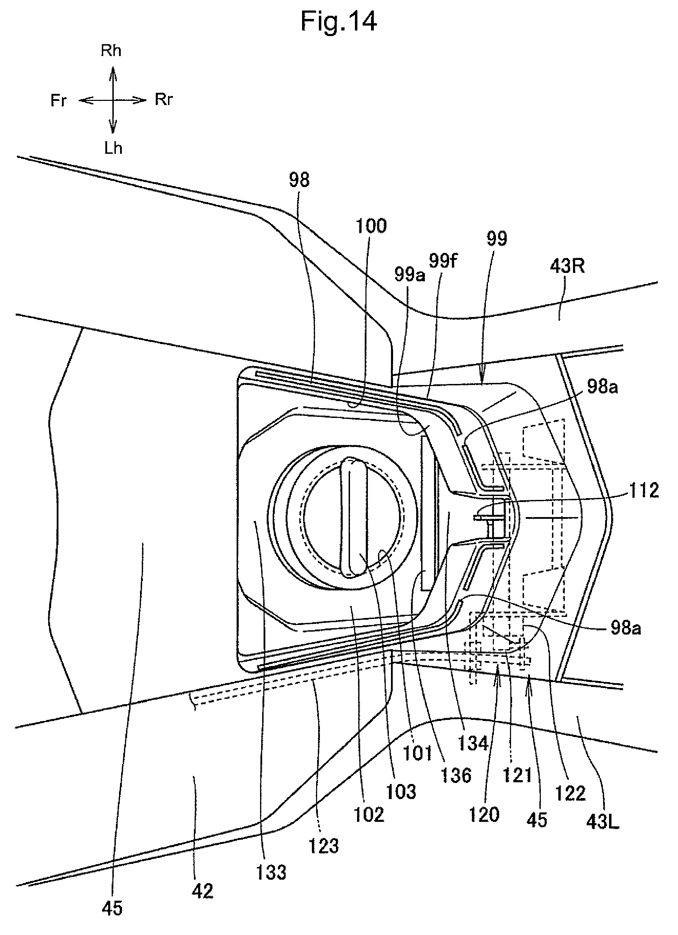

As shown in FIG. 14, an opening 100 to be covered with the fuel lid 97 (see FIG. 13) is provided in the center cover 45, a fuel filler port 101 is provided to the fuel tank 33 (see FIG. 1) below the fuel lid 97, and a fuel tray 102 is provided on the upper face of the fuel tank 33 in such a manner as to cover the periphery of the fuel filler port 101.

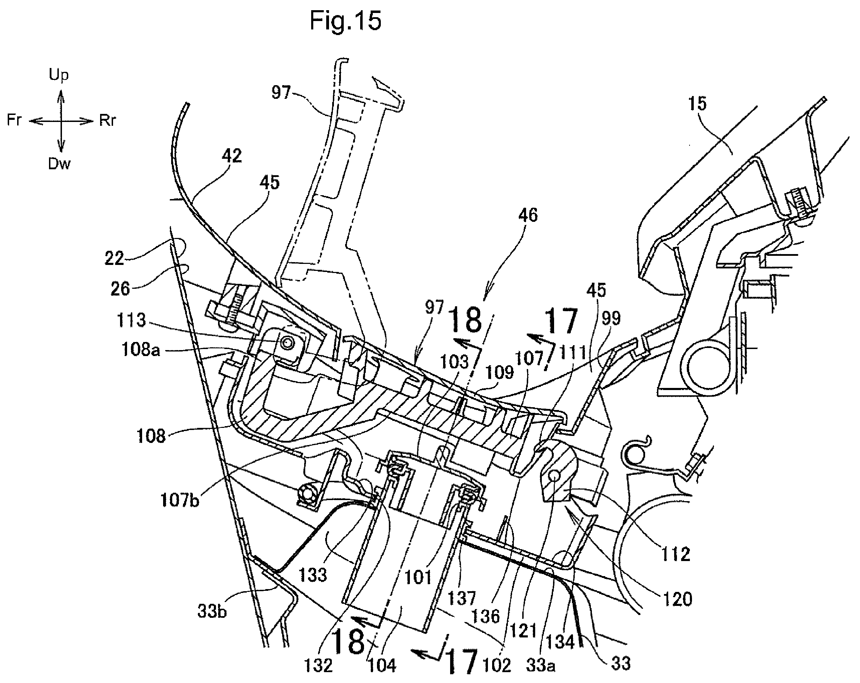

As shown in FIG. 15, a cylindrical member 104 having the fuel filler port 101 penetrates a hole portion 132 of the fuel tray 102. The cylindrical member 104 having the fuel filler port 101 is arranged in an upper face 33a of the fuel tank 33 arranged below the center cover 45. A sealing member 137 is fitted between the cylindrical member 104 and the hole portion 132. The fuel filler port 101 is openably closed by a fuel cap 103.

The fuel lid 97 consists of: a main body portion 107; a lid arm 108 opened upward from a bottom portion 107b of the main body portion 107, and having a substantial U shape when viewed in cross-section; and a ceiling portion 109 covering the main body portion 107. An engaging portion 111 with which a later-mentioned claw portion 112 is engaged is formed on the rear end of the main body portion 107.

A lid hinge shaft 113 is inserted horizontally in the vehicle width direction into a tip end 108a of the lid arm 108. The lid hinge shaft 113 is attached to the center cover 45, and rotatably supports the fuel lid 97.

Also referring to FIG. 14, a locking mechanism 120 for holding the fuel lid 97 in a closed state has a lid lock shaft 121 attached to the center cover 45, the claw portion 112 rotatably supported by the lid lock shaft 121, a spring 122 biasing the claw portion 112 toward the locking side, and a lid wire cable 123 that drives the claw portion 112 to the unlock side at the time of opening the fuel lid 97.

Referring back to FIG. 14, a liquid guide portion 99a for guiding liquid to the fuel tray 102 is formed in the concave portion 99 in the center cover 45. A liquid guide rib 98, which extends in such a manner as to surround left and right sides as well as the rear of the opening 100, is provided in a standing manner in an upper portion of the liquid guide portion 99a. Notches 98a, 98a are formed in parts of a rear portion of the liquid guide rib 98, and liquid having run down the liquid guide rib 98 flows downward from the notches 98a, 98a, and is introduced to the fuel tray 102.

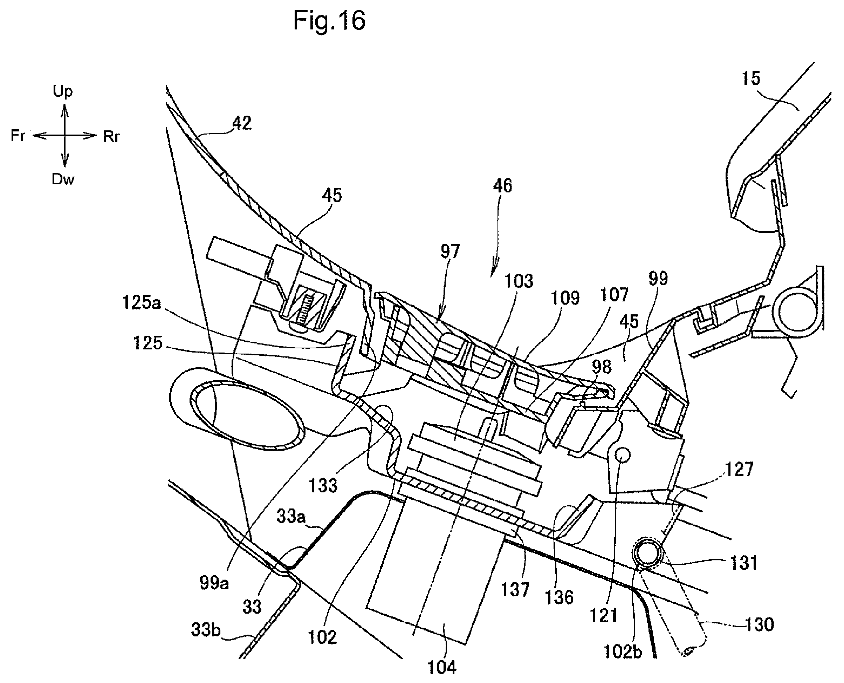

As shown in FIG. 16, the liquid guide portion 99a formed in the concave portion 99 of the center cover 45 has a function of guiding liquid to the fuel tray 102 arranged therebelow. The liquid guide portion 99a extends lower than an upper end 125a of a front wall 125 of the fuel tray 102. Specifically, the liquid guide portion 99a is extended in an eaves shape, in such a manner as to overlap a rear part of the front wall 125 of the fuel tray 102 in the height direction. Hence, liquid having dripped onto the liquid guide portion 99a can all be received in the fuel tray 102.

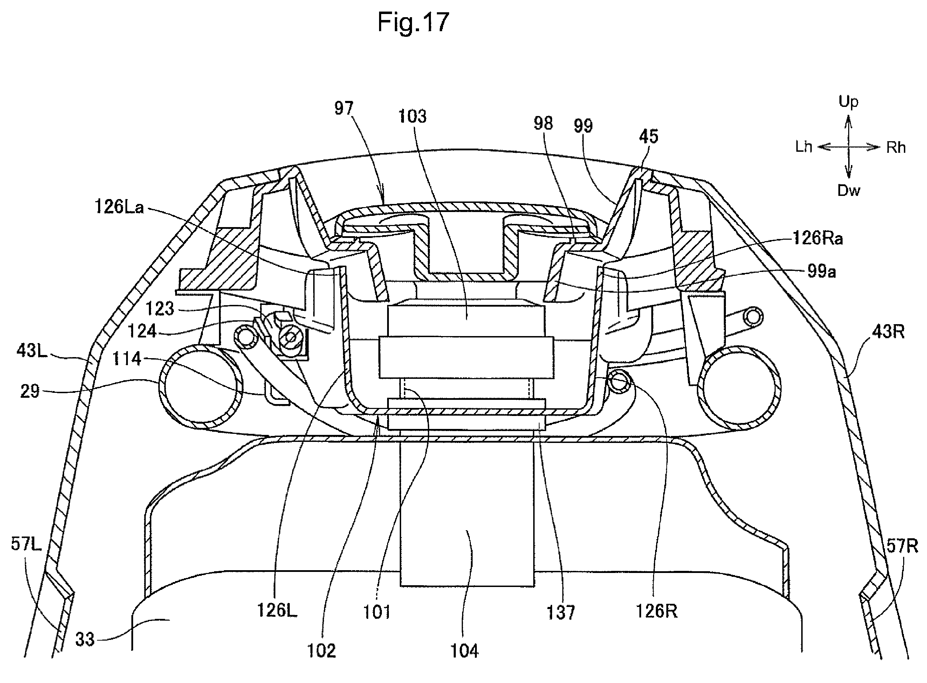

As shown in FIG. 17, the center cover 45 is supported by the upper frame 29. Additionally, as in the case of the aforementioned front wall 125 (see FIG. 16), the concave portion 99 provided in the center cover 45 and extending downward extends lower than each of upper ends 126La, 126Ra of left and right side walls 126L, 126R. Specifically, the liquid guide portion 99a of the concave portion 99 extends in an eaves shape lower than the upper ends 126La, 126Ra of the left and right side walls 126L, 126R, inside the left and right side walls 126L, 126R. Hence, liquid having flown to the liquid guide portion 99a can all be received in the fuel tray 102.

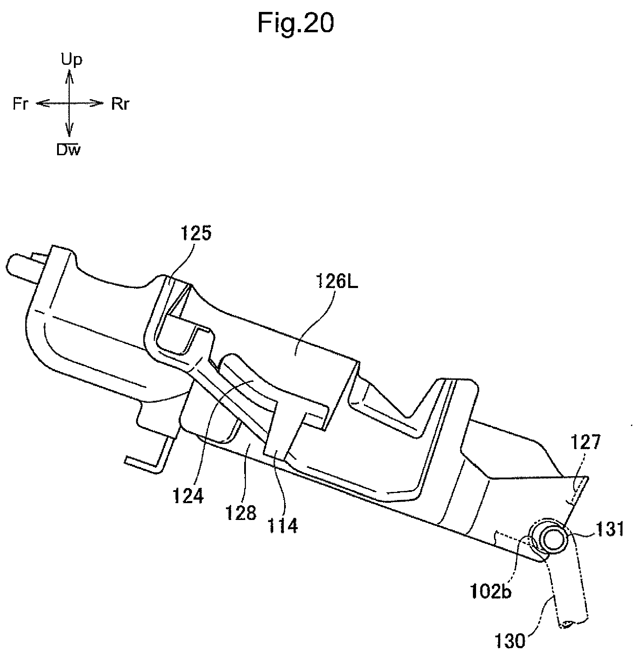

As shown in FIGS. 17 to 20, the fuel tray 102 has: a tray main body 128 having the front wall 125, the left and right side walls 126L, 126R extending rearward from left and right end portions of the front wall 125, and a rear wall 127 bridged across the rear ends of the left and right side walls 126L, 126R and receiving spilled fuel; a lid wire guide portion 124 fixed so as to extend in the front-rear direction on the left end of the tray main body 128, and having the lid wire cable 123 placed thereon to guide and hold the lid wire cable 123; and a drain hole 131 fixed on the rear left end of the tray main body 128 and discharging liquid pooled in the tray main body 128. A second guide portion 114 protruding downward and guiding another pipe member is fixed in the lid wire guide portion 124.

A drain pipe 130 for discharging liquid including excess fuel to the outside of the vehicle can be connected to the drain hole 131 of the fuel tray 102. Since the drain hole 131 is provided at the left end of the tray main body 128, when the vehicle is parked by setting up the side stand 49 (see FIG. 1), liquid pooled in the tray main body 128 is guided to the drain hole 131, and is smoothly discharged to the outside of the vehicle through the drain pipe 130 connected to the drain hole 131.

The hole portion 132 into which the cylindrical member 104 having the fuel filler port 101 (see FIG. 17) is inserted is formed in the tray main body 128, and a partitioning rib 136 extending in the vehicle width direction protrudes at the vehicle rear of the hole portion 132. Of parts partitioned by the partitioning rib 136, a front part of the tray main body 128 is defined as an exposed portion 133, and a rear part of the tray main body 128 is defined as a reservoir portion 134. The tray main body 128 is arranged so that its vehicle rear part is positioned lower in side view of the vehicle. A lowest point 102b of the fuel tray 102 is provided in the reservoir portion 134 arranged at the vehicle rear of the exposed portion 133, and at the vehicle rear of the hole portion 132. The fuel tank 33 is formed by butt-welding an upper half body 33a and a lower half body 33b at their flange portions.

Referring back to FIG. 14, the partitioning rib 136 separating the exposed portion 133 and the reservoir portion 134 is arranged so as to follow the shape of the rear end of the opening 100. The reservoir portion 134 can be made less recognizable from outside, since it is shielded by the downwardly extending concave portion 99 and the upwardly protruding partitioning rib 136. Meanwhile, the exposed portion 133 is recognizable from outside.

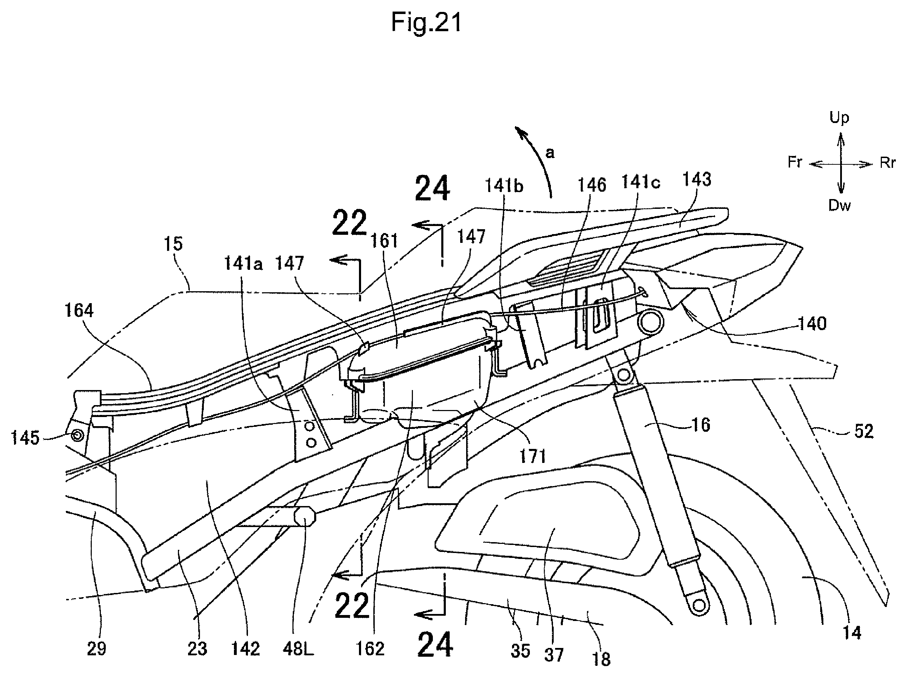

A storage box provided in a rear portion of the vehicle will be described with reference to the following FIGS. 21 to 28.

As shown in FIG. 21, multiple supporting stays 141a to 141c protruding upward are provided in the rear frame 23, which extends obliquely upward in the rear direction of the vehicle. A storage box 142 is placed on the multiple supporting stays 141a to 141c, and the seat 15 on which the rider and/or the passenger sits is placed on the storage box 142. In addition to the storage box 142, a grab rail 143 is attached to the supporting stays 141a to 141c.

A hinge shaft 145 is provided in a front end portion of the storage box 142. The hinge shaft 145 extends horizontally in the vehicle width direction, and has the front end of the seat 15 attached thereto. Further, a seat locking mechanism 140 for openably locking the seat 15 is provided in a rear end portion of the storage box 142. A seat locking cable 146 extends toward the vehicle front from the seat locking mechanism 140.

To open the storage box 142, the core wire inside the seat locking cable 146 is pulled toward the vehicle front, and the seat 15 is rotated around the hinge shaft 145 in the direction of arrow a in FIG. 21 with the seat locking mechanism 140 switched to the unlocked from locked state, whereby an upper part of the storage box 142 is opened.

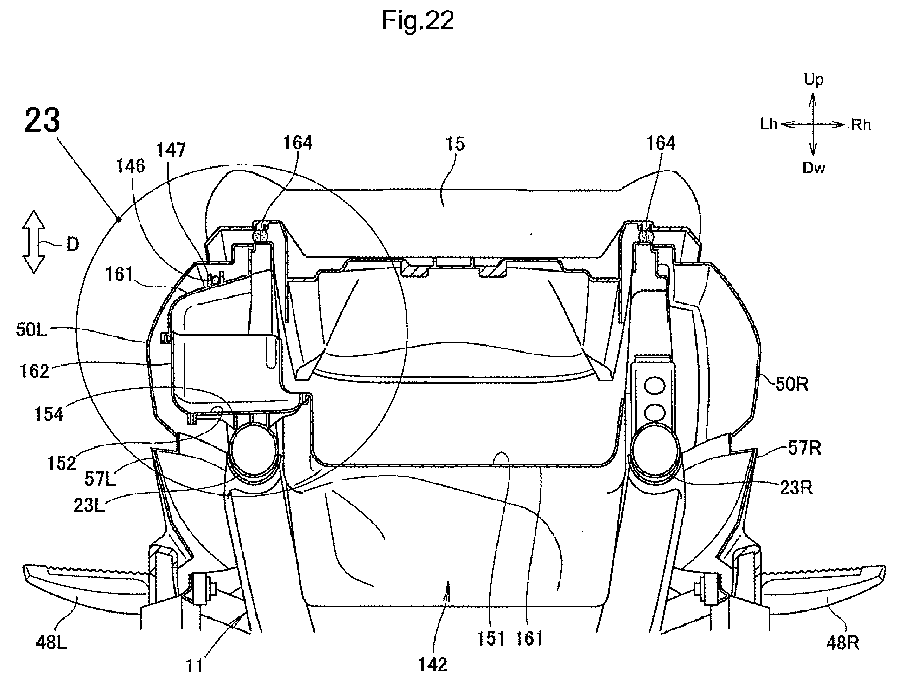

In the following FIGS. 22 to 25, the direction of arrow D indicates the direction in which a die for molding the storage box is drawn.

As shown in FIG. 22, the storage box 142 for storing articles is supported by paired left and right rear frames 23L, 23R, the seat 15 is arranged above the storage box 142, and the storage box 142 and sides of the vehicle body including the body frame 11 are covered with the rear side body covers 50L, 50R, below the seat 15.

The storage box 142 includes: a first storage portion 151 provided between the paired left and right rear frames 23L, 23R; and a second storage portion 152 provided so as to bulge toward the outside of the rear frame 23 in the vehicle width direction from the first storage portion 151, and communicating into the first storage portion 151.

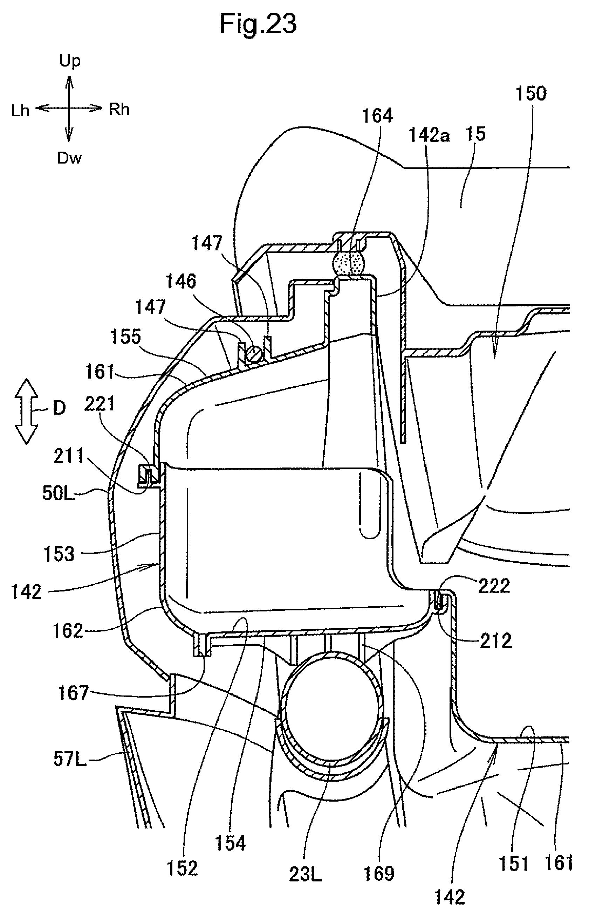

The first storage portion 151 and the second storage portion 152 are formed by combining two members, which are a resin-molded first member 161 and a resin-molded second member 162. Specifically, the first storage portion 151 is formed of the first member 161, and the second storage portion 152 is formed of the first member 161 and the second member 162. Details of the second storage portion 152 formed of the first member 161 and the second member 162 will be described with reference to the following FIG. 23.

As shown in FIG. 23, the first storage portion 151 is formed of the first member 161. The second storage portion 152 is formed of the first member 161 and the second member 162. To be more precise, most of a lower portion of a side face 153 and a bottom face 154 of the second storage portion 152 are formed of the second member 162, and an upper face (ceiling face 155) of the second storage portion 152 is formed of the first member 161.

The bottom face 154 of the second storage portion 152 is configured of the second member 162 different from the first member 161 constituting the first storage portion 151, and the bottom face 154 of the second storage portion 152 constituting the bottom face of a storage portion 150 is extended further to the inside of the storage box 142 than a sealing face 164 closing an opening 142a of the storage box 142. The bottom face 154 of the second storage portion 152 abuts on the rear frame 23L through a supporting rib 169. A drain hole portion 167 for discharging water inside the storage box 142 is provided at the outer end of the bottom face 154 of the second storage portion 152 in the vehicle width direction. Since the drain hole portion 167 is provided close to the outer end of the bottom face 154 of the second storage portion 152 in the vehicle width direction, when the vehicle is tilted by setting up the side stand 49 (see FIG. 1), water gathered to the left side can be smoothly discharged to the outside of the vehicle.

A seat locking cable guide portion 147 for guiding the seat locking cable 146 is provided in the upper face (ceiling face 155) of the second storage portion 152, and the seat locking cable 146 extending in the longitudinal direction of the vehicle is disposed on the seat locking cable guide portion 147. Since the seat locking cable guide portion 147 is integrally provided in the second storage portion 152, the number of parts can be reduced as compared to a case of providing a guide member separately.

In addition, the side face 153 of the second storage portion 152 is arranged so as to follow the shape of the rear side body cover 50L. By arranging the side face 153 of the second storage portion 152 so as to follow the shape of the rear side body cover 50L, the storage volume of the second storage portion 152 can be made larger than a case where it is not arranged in this manner.

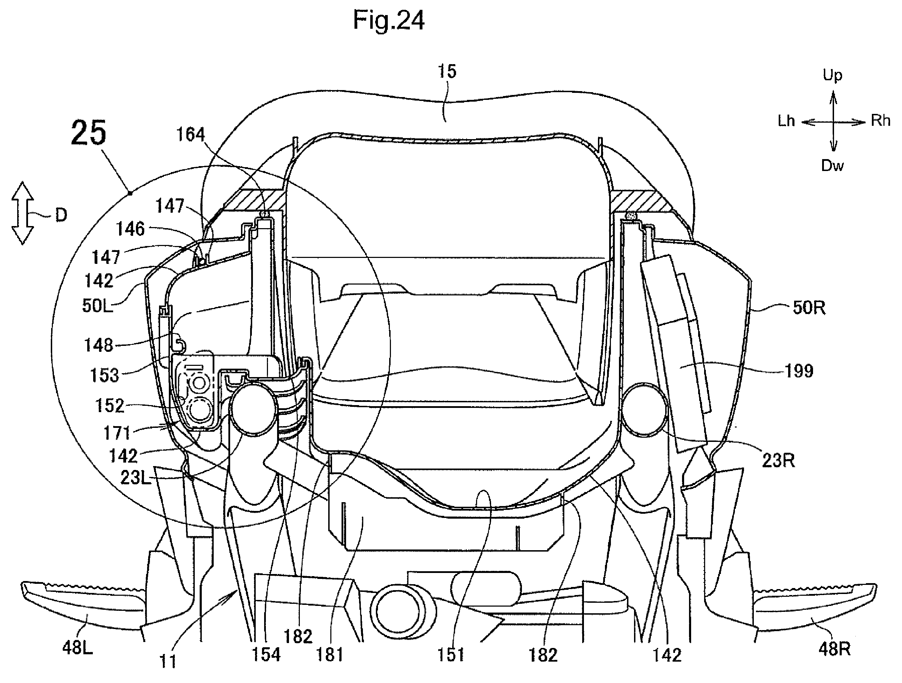

As shown in FIG. 24, the storage box 142 is supported by the paired left and right rear frames 23L, 23R, the seat 15 is arranged above the storage box 142, and sides of the vehicle body are covered with the rear side body covers 50L, 50R, below the seat 15.

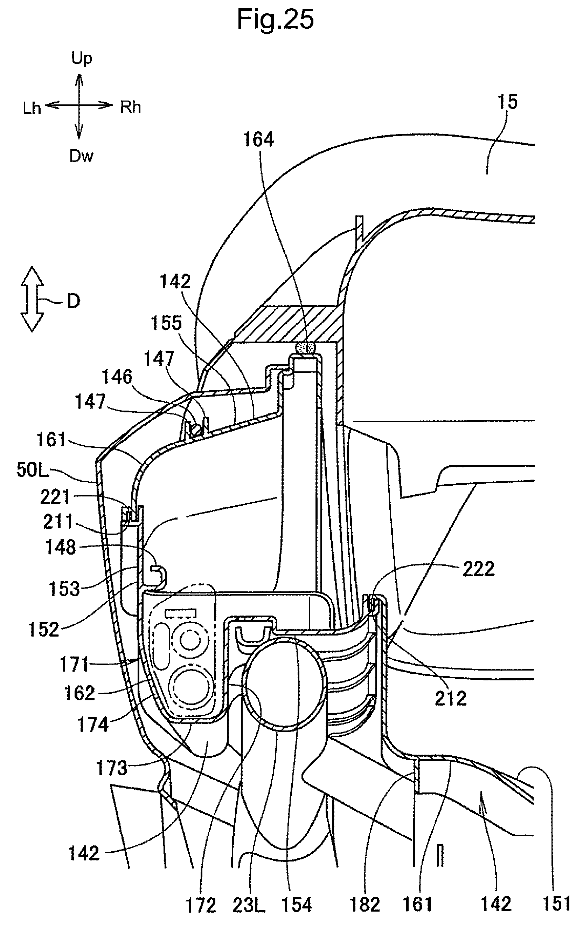

As shown in FIG. 25, a hanging portion 171 hanging outside the left rear frame 23L is provided in the second storage portion 152. The hanging portion 171 is formed of the second member 162. The hanging portion 171 has a lower vertical wall 172 hanging down from the bottom face 154 of the second storage portion 152 outside the left rear frame 23L, and a second bottom face 173 extending outward in the vehicle width direction from the lower end of the lower vertical wall 172. The hanging portion is connected to an extended side face 174, which is formed by extending the side face 153 of the second storage portion 152 downward, outside the second bottom face 173 in the vehicle width direction. The extended side face 174 is arranged so as to follow the shape of the rear side body cover 50L. Additionally, the bottom face 154 of the second storage portion 152 abuts on the rear frame 23L. A hook portion 148, which extends upward and on which a member such as a rubber baggage strap for fixing articles can be hooked, is provided on the side face 153 of the second storage portion 152. The hook portion 148 is provided in the second member 162.

Next, a description is given that the storage box has a divided structure.

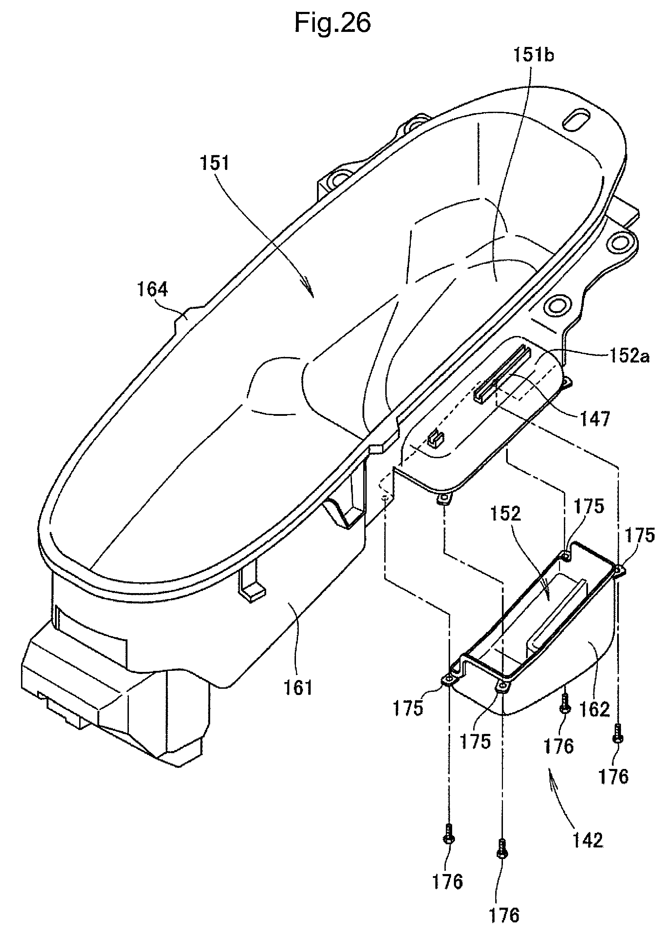

As shown in FIG. 26, the second member 162 is attached to the first member 161, which constitutes a main portion of the storage box 142, by bringing flanges 175 of the second member 162 into contact with the first member 161 from below, and inserting fastening members 176 from below. In other words, the first member 161 and the second member 162 are vertically engaged and attached to each other in the height direction.

Referring back to FIGS. 23 and 25, engaging portions where the second member 162 is engaged with the first member 161 are described. A first engaging concave portion 211 is formed in the first member 161, and a first engaging convex portion 212 is formed inside the first engaging concave portion 211 in the vehicle width direction. A second engaging convex portion 221 and a second engaging concave portion 222 inside the second engaging convex portion 221 in the vehicle width direction are formed in the second member 162. Then, the second member 162 is assembled onto the first member 161 by engaging the second engaging convex portion 221 with the first engaging concave portion 211, and engaging the second engaging concave portion 222 with the first engaging convex portion 212.

Next, a description is given that ribs for avoiding mud splash from the rear wheel are fixed on a bottom portion of the storage box 142.

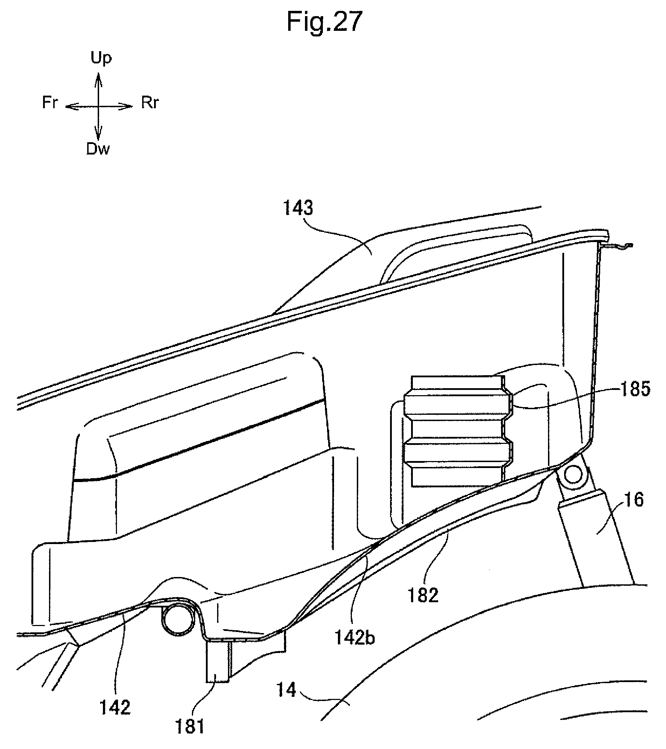

FIG. 27 is a cross-sectional view of the storage box 142 taken along its centerline in the vehicle width direction. As shown in FIG. 27, a mudguard 181 for keeping mud splashed from the rear wheel 14 from splashing to the vehicle front is attached to a bottom face 142b of the storage box 142, and a mudguard rib 182 for reinforcing the bottom face 142b of the storage box 142 as well as keeping mud splashed from the rear wheel 14 from splashing to the side of the vehicle, is hung from the bottom face 142b of the storage box 142 so as to be continuous with the mudguard 181, outside the rear wheel 14 in the vehicle width direction and along the rear wheel 14 in the longitudinal front-rear direction of the vehicle. The mudguard 181 and the mudguard rib 182 provided in the bottom face 142b of the storage box 142 can suppress mud splash from the rear wheel 14.

Next, partition plates partitioning the inside of the storage box 142 will be described.

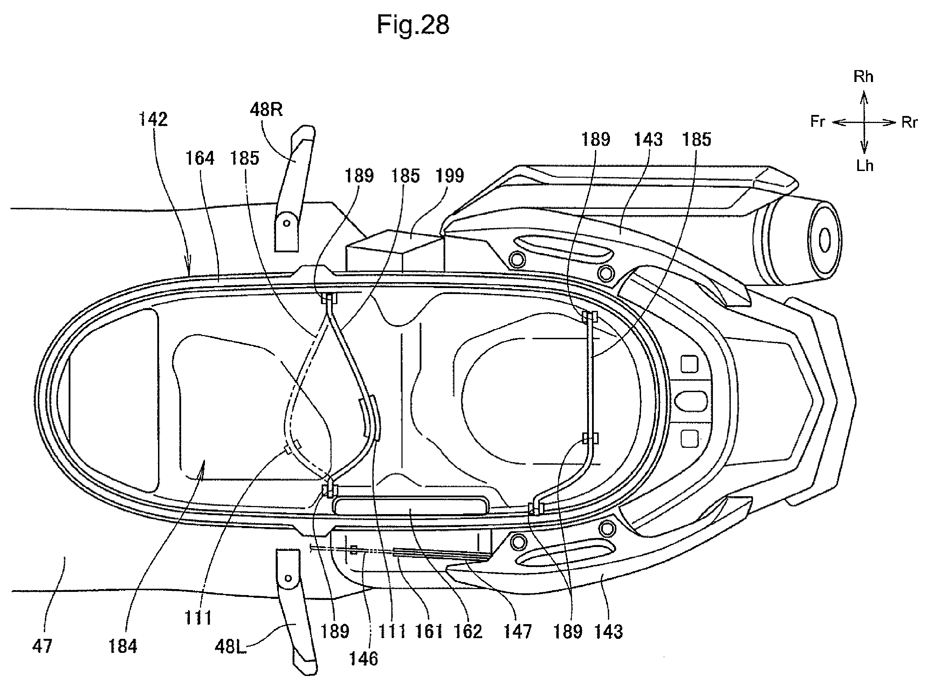

As shown in FIG. 28, the storage box 142 includes the annular sealing face 164 on which the seat 15 (see FIG. 1) is placed in plan view of the vehicle, and the inside of the sealing face 164 is defined as a storage portion 184. Multiple locking portions 189 with which partition plates 185 can be engaged are fixed to the storage portion 184, and the partition plates 185 are detachably inserted into the locking portions 189. By inserting the partition plates 185, articles can be prevented from moving and getting scattered during travel. Additionally, articles can be stored according to their various different shapes. Note that an ECU unit 199 is arranged on the right side of the storage box 142.

Effects of the above-described motorcycle are as follows.

First, as shown in FIG. 5, the duct 77 extending to the rear side 55b of the screen 55 from the air intake 76 is provided at the vehicle rear of the visor 56. A part of traveling wind taken in from the air intake 76 passes through the duct 77 and is guided to the rear side of the screen 55, which is the rear side 55b of the screen 55, while a part of traveling wind taken in from the air intake 76 flows to the front of the screen 55, which is the front face of the screen 55. Since the duct 77 allows traveling wind to flow to the rear of the screen 55, the amount of traveling wind passing through between the visor 56 and the screen 55 can be reduced.

The amount of traveling wind passing through between the visor 56 and the screen 55 is reduced, and traveling wind taken in from the air intake 76 passes through the duct 77 and is guided to the rear side of the screen 55. In this case, the amount of traveling wind being guided to the rear of the screen does not vary largely even when the screen 55 is slid upward or downward, and thus traveling wind can be constantly guided to the rear of the screen 55.

Second, the length of the duct 77 overlaps the movable range in which the lower end 55d of the screen 55 slides, and is longer than the movable range of the screen 55.

As shown in FIGS. 6(a) to 6(c), when the screen 55 is in the uppermost sliding position of the screen 55, it is positioned between an upper end 77a and lower end 77b of the duct 77. Similarly, as shown in FIGS. 7(a) to 7(c), when the lower end 55d of the screen 55 is in the lowermost sliding position of the screen 55, it is also positioned between the upper end 77a and lower end 77b of the duct 77.

To be specific, since the upper end 77a of the duct 77 is positioned higher than the lower end 55d of the screen 55, traveling wind taken in from the air intake 76 is guided to the rear side 55b of the screen 55 regardless of whether the screen is at the upper end or is at the lower end, and thus its amount is less likely to vary. In other words, the amount of traveling wind flowing to the rear of the screen 55 does not vary largely even when the screen 55 is slid to a different position, and thus traveling wind can be constantly guided to the rear of the screen. As a result, ease in steering can be enhanced while maintaining a predetermined windbreak performance.

Third, as shown in FIGS. 4 and 10, the rails 64 supporting the screen 55 in a vertically slidable manner are arranged so as to incline along the front face 54a of the meter panel 54. As shown in FIG. 5, since the rail 64 and the screen 55 are formed so as to follow the curved shape of the meter panel 54, the gap δ1 between the screen 55 and the visor 56 as well as the gap δ2 between the screen 55 and the duct upper face can be reduced.

It is possible to suppress variation in the amount of traveling wind flowing through between the screen 55 and the visor 56, as well as between the screen 55 and the upper face of the duct 77, if the gaps δ1, δ2 are reduced. Since the gaps δ1, δ2 are small, variation in the amount of traveling wind is small even when the screen 55 is slid vertically. Accordingly, the amount of traveling wind flowing to the rear of the screen does not vary largely, so that traveling wind can be constantly guided to the rear of the screen. As a result, ease in steering can be enhanced even more while maintaining a predetermined windbreak performance. In addition, reduction in the gaps δ1, δ2 can reduce the size of the front portion of the vehicle. Further, reduction in the gap δ1 makes parts inside the visor 56 less recognizable from between the screen 55 and the visor 56, and thus appearance is improved.

Fourth, as shown in FIG. 3, the visor 56 overlapping the duct 77 and the rails 64 (64L, 64R) is formed of a member less transmissive than the screen 55. The visor 56 using the low-transmittance member can cover up the duct 77 and the rail 64, so that appearance of the vehicle can be improved.

Fifth, the duct 77 is arranged between the paired left and right rails 64L, 64R. If the duct 77 can be formed thinner than the rails 64, the visor 56 can be arranged closer to the rails 64. Moreover, since the duct 77 is arranged between the paired left and right rails 64L, 64R, limited space can be utilized effectively.

Conventionally, in a screen slide mechanism using an air cylinder, for example, the size of the slide mechanism tended to become large, and the slide stroke of the screen was limited.

Meanwhile, the present invention does not use an air cylinder but uses the left and right rails 64 for sliding the screen 55, whereby the screen mechanism can be reduced in size. Reduction in the size of the screen mechanism and effective utilization of space allows more freedom in designing the front portion of the vehicle. As a result, appearance of the vehicle can be improved more easily.

Sixth, as shown in FIG. 5, the duct 77 includes the curved portion 78 that comes closer to the visor 56 as it approaches the air intake 76. Since the duct 77 comes close to the visor 56 around the air intake 76, a gap δ3 between the duct 77 and the visor 56 can be reduced. Reduction in the gap δ3 allows a larger amount of traveling wind to be taken into the duct 77 from the air intake 76. It is possible to suppress variation in the amount of traveling wind flowing through between the screen 55 and the visor 56, as well as between the upper face of the duct 77 and the screen 55, even when the screen 55 is slid vertically and the position of the screen 55 varies vertically. Accordingly, the amount of traveling wind flowing to the rear of the screen does not vary largely, so that traveling wind can be constantly guided to the rear of the screen. As a result, ease in steering can be enhanced even more while maintaining a predetermined windbreak performance.

Seventh, as shown in FIG. 8, the lower edge 93 of the screen 55 is formed so as to follow the shape of the mirror covers 65L, 65R. Since the lower edge 93 of the screen 55 is formed so as to follow the shape of the mirror covers 65L, 65R, the lower edge 93 of the screen 55 can be brought closer to the mirror covers 65L, 65R when the screen 55 is moved downward. Additionally, the movable range in which the screen 55 slides can be made larger than a case where the lower edge of the screen is formed so as not to follow the shape of the mirror cover. As a result, the windbreak performance of the screen 55 can be enhanced.

Eighth, as shown in FIG. 11, in side view, the rail 64 is curved in such a manner as to protrude downward, and the screen 55 is curved in such a manner as to protrude upward.

As shown in FIGS. 11(a) and 11(b), by assigning predetermined curvatures to the rail 64 and the screen 55, the gap p formed between an upper end 56a of the visor 56 and the screen 55 can be kept as close as possible and maintained to be constant even in the state when scree 55 slides. A part of traveling wind having entered from the air intake 76 flows through between the visor 56 and the screen 55 without entering the duct 77. At this time, since the gap p between the upper end 56a of the visor 56 and the screen 55 is small, and variation in the gap p caused by sliding of the screen 55 is kept small, the flow amount of traveling wind can be suppressed. Accordingly, the amount of traveling wind flowing to the rear of the screen does not vary largely, so that traveling wind can be constantly guided to the rear of the screen. As a result, ease in steering can be enhanced even more while maintaining a predetermined windbreak performance. Additionally, since variation in the gap p can be reduced, the inner structure of the visor 56 can be made less recognizable from the gap p between the visor 56 and the screen 55. Hence, appearance is improved.

Ninth, as shown in FIG. 16, the fuel lid 97 is provided so as to be accommodated in the concave portion 99 formed in the center cover 45.

If the fuel lid is to be arranged flush with the upper face of the center cover when it is arranged in the straddle space, the dimensional tolerance of the center cover and the fuel lid needs to be kept within a predetermined tolerance. Molding accuracy of the center cover and the fuel lid needs to be improved to keep the dimensional tolerance within the predetermined tolerance, which tends to increase cost.

Meanwhile, since the fuel lid 97 of the present invention is provided so as to be accommodated in the concave portion 99 formed in the center cover 45, the dimensional tolerance of the fuel lid 97 in the height direction can be made larger than the structure where the fuel lid is arranged flush with the upper face of the center cover. The fuel lid 97 can be manufactured at a lower cost because of the enlargement in dimensional tolerance.

Referring back to FIG. 13, since the concave portion 99 depressed downward is provided in the center portion of the center cover 45 in the vehicle width direction, the shape of the straddle portion (straddle space 46) can have a unique appearance.

Tenth, the inner panel 42, which constitutes the straddle space 46 and extends downward toward the center cover 45 to be connected to the outer edge 99f of the concave portion 99, is provided at the vehicle front of the left and right side body covers 43L, 43R. Specifically, since the inner panel 42 is connected to the outer edge 99f of the concave portion 99, the shape of the concave portion 99 formed in the center portion of the straddle space 46 can be enhanced, as compared to a structure where the inner panel is not connected to the outer edge of the concave portion. As a result, the shape around the motorcycle straddle portion (straddle space 46) can have an even more unique appearance.

Eleventh, as shown in FIG. 14, the liquid guide rib 98 for guiding liquid to the fuel tray 102 is formed in the concave portion 99 in the center cover 45. The liquid guide rib 98 guides liquid such as rainwater pooled in the concave portion 99 of the center cover 45 to the fuel tray 102, through the notches 98a. Not only excess fuel flown into the fuel tray 102, but also liquid such as rainwater pooled in the concave portion 99 of the center cover 45 is discharged to the outside of the vehicle through the fuel tray 102. Hence, attached dust or dirt and pooled excess fuel having flown into the fuel tray 102 are likely to be effectively discharged to the outside of the vehicle. Accordingly, dirt on the fuel tray 102 can be made less recognizable when the fuel lid 97 is opened, and appearance of the fuel tray 102 can be improved.

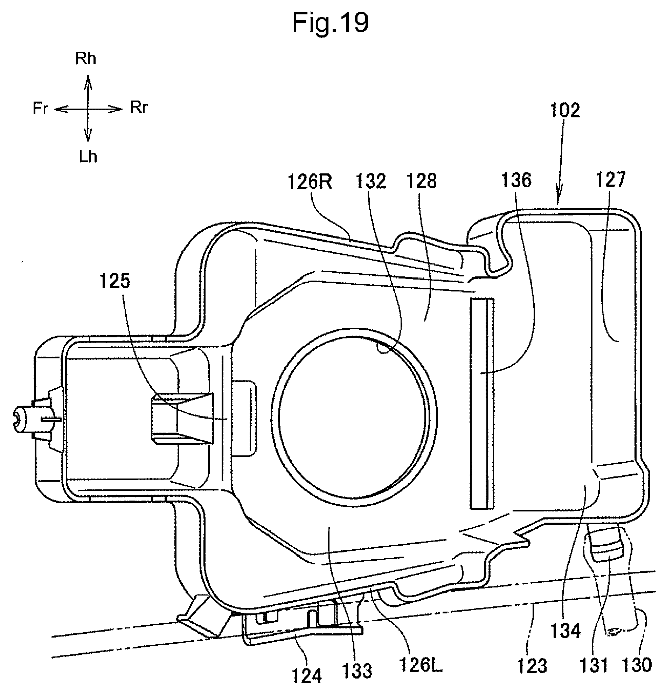

Twelfth, as shown in FIGS. 14 and 19, the partitioning rib 136 protruding upward is provided in the fuel tray 102. The reservoir portion 134 can be made less recognizable from the outside by partitioning the periphery of the fuel filler port 101 by the partitioning rib 136. Even when the fuel lid 97 is opened, the reservoir portion 134 is less recognizable and only the exterior portion (exposed portion 133) of the fuel tray 102 is exposed, so that dirt on the fuel tray 102 can be made less recognizable. Consequently, appearance of the fuel tray 102 can be improved.

Thirteenth, as shown in FIGS. 14 and 19, the lowest point 102b of the fuel tray 102 is provided in the reservoir portion 134 at the vehicle rear of the opening 100. Since the lowest point 102b of the fuel tray 102 is provided behind the opening 100, liquid pooled in the fuel tray 102 can be gathered in a position not facing the opening 100. Hence, dirt on the fuel tray 102 can be made less recognizable when the fuel lid 97 is opened. Consequently, appearance of the fuel tray 102 can be improved even more.

Fourteenth, as shown in FIGS. 21 to 23, the storage box 142 includes the first storage portion 151 provided between the rear frames 23L, 23R, and the second storage portion 152 provided so as to bulge toward the outside of the rear frame 23L, which is provided outside the first storage portion 151 in the vehicle width direction.

The first storage portion 151 and the upper face (ceiling face 155) of the second storage portion 152 are formed of the first member 161, whereas the side face 153 and the bottom face 154 of the second storage portion 152 are formed of the second member 162. The first member 161 and the second member 162 are vertically engaged with each other and constitute the storage box 142. In other words, the second storage portion 152 is formed of divided upper and lower portions, which are the first member 161 and the second member 162. Moreover, the hanging portion 171 hanging down toward the lower part of the rear frame 23L is provided in the second member 162, outside the rear frame 23L in the vehicle width direction.

By configuring the first storage portion 151 and the second storage portion 152 by combining two members, which are the first member 161 and the second member 162, as well as providing the hanging portion 171 in the second member 162, the space outside the rear frame in the vehicle width direction can be utilized effectively as storage space.

Fifteenth, the bottom face 154 of the second storage portion 152 abuts on the rear frame 23L. That is, since the bottom face 154 of the second storage portion 152 is supported by the rear frame 23L, heavy goods can be mounted in the second storage portion 152. As a result, loading capacity can be improved.

Sixteenth, the side face 153 of the second storage portion 152 is arranged so as to follow the shape of the rear side body cover 50L. With this, the second storage portion 152 can be arranged as close as possible to the rear side body cover 50L. Consequently, storage space can be enlarged without expanding the vehicle body in the vehicle width direction.

Seventeenth, the second member 162 constituting the bottom face 154 of the second storage portion 152 extends to the inside of the sealing face 164. Specifically, the second member 162 is attached to a position where it digs into the first member 161 constituting the first storage portion 151. Accordingly, rigidity of the second member 162 can be enhanced as compared to a structure where the second member is simply attached from the side of the first member. Enhanced rigidity of the second member 162 allows heavy goods to be mounted in the second storage portion 152. Consequently, loading capacity can be improved even more.

Eighteenth, the seat locking cable guide portion 147 for guiding the seat locking cable 146 is disposed on the upper face 155 of the second storage portion 152. To be specific, the seat locking cable guide portion 147 is disposed between the upper face 155 of the second storage portion 152 and the rear side body cover 50L, whereby the space between the upper face 155 of the second storage portion 152 and the rear side body cover 50L can be utilized effectively.

Nineteenth, as shown in FIG. 24, the upper face 155 of the second storage portion 152 is formed of the first member 161, whereas the side face 153 and the bottom face 154 of the second storage portion 152 are formed of the second member 162, and the hook portion 148 extending upward is provided in the second member 162. In other words, the hook portion 148 is provided in the second storage portion 152 divided into upper and lower parts. Articles stored in the second storage portion 152 can be fixed by the hook portion 148. Consequently, loading capacity can be improved.

Twentieth, as shown in FIG. 21, the pillion steps 48L, 48R are arranged at the vehicle front of the second storage portion 152. Specifically, the second storage portion 152 is arranged in a position not interfering with the foot of the passenger, and thus the second storage portion 152 can be enlarged while maintaining comfort of the passenger. As a result, storage space of the storage portion 150 can be enlarged without expanding the vehicle width.

Note that although the present invention has been applied to a motorcycle in the embodiment, it is also applicable to a tricycle, and can be applied to a general vehicle.

The present invention is suitable for a motorcycle including a storage box below the seat.

### Description of Reference Numerals

10 ...motorcycle, 15 ... seat, 21 ...head pipe, 23L, 23R ...left and right rear frames, 48L, 48R ...left and right pillion steps, 50L, 50R ...rear side body cover, 140 ...seat locking mechanism, 142 ...storage box, 146 ...seat locking cable, 147 ...seat locking cable guide portion, 148 ...hook portion, 151 ...first storage portion, 152 ...second storage portion, 153 ...side face of second storage portion, 154 ...bottom face of second storage portion, 155 ...upper face (ceiling face) of second storage portion, 161 ...first member, 162 ...second member, 164 ...sealing face, 171 ...hanging portion.

## Claims

1. A motorcycle comprising:
paired left and right rear frames (23L, 23R);
a storage box (142) supported by the paired left and right rear frames (23L, 23R) and storing articles;
a seat (15) provided above the storage box (142) and on which any of a rider and a passenger sits; and
a rear side body cover (50L, 50R) covering sides of the vehicle body below the seat (15), **characterised in that**:
said storage box (142) includes
a first storage portion (151) provided between said paired left and right rear frames (23L, 23R), and
a second storage portion (152) provided so as to bulge toward the outside of said rear frame (23L, 23R) in the vehicle width direction from the first storage portion (151), and communicating into said first storage portion (151);
said first storage portion (151) and an upper face (155) of said second storage portion (152) are formed of a first member (161);
a side face (153) and a bottom face (154) of said second storage portion (152) are formed of a second member (162);
the second member (162) includes a hanging portion (171) hanging outside said rear frame (23L, 23R); and
said first member (161) and said second member (162) are vertically engaged with each other in the height direction.

2. The motorcycle according to claim 1, wherein
at least a part of the bottom face (154) of said second storage portion (152) abuts on said rear frame (23L, 23R).

3. The motorcycle according to any one of claims 1 and 2, wherein
the side face (153) of said second storage portion (152) is arranged so as to follow the shape of said rear side body cover (50L, 50R).

4. The motorcycle according to any one of claims 1 to 3, wherein:
said storage box (142) includes an annular sealing face (164) on which said seat (15) is placed in side view of the vehicle; and
at least a part of the bottom face (154) of said second storage portion (152) extends to the inside of said sealing face (164).

5. The motorcycle according to any one of claims 1 to 4, wherein
a seat locking cable guide portion (147) for guiding a seat locking cable (146) connected to a seat locking mechanism (140) is provided in said storage box (142).

6. The motorcycle according to any one of claims 1 to 5, wherein
a hook portion (148) extending upward from said second member (162) is provided in said second storage portion (152).

7. The motorcycle according to any one of claims 1 to 6, wherein
pillion steps (48L, 48R) attached to said rear frames (23L, 23R) and on which said passenger is able to place his/her feet are arranged at the vehicle front of said second storage portion (152).

## Patentansprüche

1. Motorrad aufweisend:
paarweise linke und rechte hintere Rahmen (23L, 23R);
ein Aufbewahrungsbehälter (142), der durch die paarweisen linken und rechten hinteren Rahmen (23L, 23R) getragen wird und Gegenstände aufbewahrt;
einen Sitz (15), der oberhalb des Aufbewahrungsbehälters (142) vorgesehen ist und auf dem ein Fahrer oder ein Passagier sitzt; und
eine rückwärtige Karosserieabdeckung (50L, 50R), die Seiten der Fahrzeugkarosserie unterhalb des Sitzes (15) abdeckt,
**dadurch gekennzeichnet, dass**
der Aufbewahrungsbehälter (142) einen ersten Aufbewahrungsbereich (152) umfasst, der zwischen den paarweisen linken und rechten hinteren Rahmen (23L, 23R) vorgesehen ist,
einen zweiten Aufbewahrungsbereich (152), der so vorgesehen ist, dass er in Richtung auf eine Außenseite des hinteren Rahmens (23L, 23R) zu aus in der Fahrzeugenbreitenrichtung von dem ersten Aufbewahrungsbereich (151) ausgebeult ist, und mit dem ersten Aufbewahrungsbereich (151) verbunden ist;
der erste Aufbewahrungsbereich (151) und eine obere Fläche (155) des zweiten Aufbewahrungsbereichs (152) aus einem ersten Element (161) gebildet werden;
eine Seitenfläche (153) und eine Bodenfläche (154) des zweiten Aufbewahrungsbereichs (152) durch ein zweites Element (162) gebildet werden;
das zweite Element (162) einen hängenden Abschnitt (171), der außerhalb des hinteren Rahmens (23L, 23R) hängt, umfasst; und
das erste Element (161) und das zweite Element (162) in der Höhenrichtung vertikal miteinander im Eingriff sind.

2. Motorrad gemäß Anspruch 1, wobei
wenigstens ein Teil der Bodenfläche (154) des zweiten Aufbewahrungsbereichs (152) an dem hinteren Rahmen (23L, 23R) anliegt.

3. Motorrad gemäß einem der Ansprüche 1 oder 2, wobei
die Seitenfläche (153) des zweiten Aufbewahrungsbereichs (152) so angeordnet ist, dass sie der Form der rückwärtigen Karosserieabdeckung (50L, 50R) folgt.

4. Motorrad gemäß einem der Ansprüche 1 bis 3, wobei
der Aufbewahrungsbehälter (142) eine ringförmige Dichtfläche (164) umfasst, auf dem der Sitz (15) in einer Seitenansicht des Fahrzeugs platziert ist; und
wenigstens ein Teil der Bodenfläche (154) des zweiten Aufbewahrungsbereichs (152) sich auf die Innenseite der Dichtfläche (164) erstreckt.

5. Motorrad gemäß irgendeinem der Ansprüche 1 bis 4, wobei
ein Sitz-Sperr-Kabel-Führungsabschnitt (177) zum Führen eines Sitz-Sperr-Kabels (146), das mit einem Sitz-Sperrmechanismus (140) verbunden ist, in dem Aufbewahrungsbehälter (142) vorgesehen ist.

6. Motorrad gemäß einem der Ansprüche 1 bis 4, wobei
ein Hakenabschnitt (148), der sich nach oben von dem zweiten Element (162) erstreckt, in dem zweiten Aufbewahrungsbereich (152) vorgesehen ist.

7. Motorrad gemäß irgendeinem der Ansprüche 1 bis 6, wobei
Soziusfußrasten (48L, 48R) an den hinteren Rahmen (23L, 23R) angebracht sind und auf denen der Passagier in der Lage ist seine/ihre Füße zu platzieren, an einer Fahrzeugfront des zweiten Aufbewahrungsbereichs (152) angebracht sind.

## Revendications

1. Motocycle comprenant :
des cadres arrière gauche et droit appariés (23L, 23R) ;
un coffre de stockage (142) supporté par les cadres arrière gauche et droit appariés (23L, 23R) et stockant des articles ;
une selle (15) prévue au-dessus du coffre de stockage (142) et sur laquelle l'un quelconque d'un conducteur et d'un passager s'assied ; et
un capot de carrosserie côté arrière (50L, 50R) recouvrant des côtés de la carrosserie du véhicule en dessous de la selle (15), **caractérisé en ce que** :
ledit coffre de stockage (142) inclut
une première partie de stockage (151) prévue entre lesdits cadres arrière gauche et droit appariés (23L, 23R), et
une seconde partie de stockage (152) prévue de façon à ressortir vers l'extérieur dudit cadre arrière (23L, 23R) dans la direction de la largeur du véhicule à partir de la première partie de stockage (151), et communiquant dans ladite première partie de stockage (151) ;
ladite première partie de stockage (151) et une face supérieure (155) de ladite seconde partie de stockage (152) sont formées d'un premier organe (161) ;
une face latérale (153) et une face inférieure (154) de ladite seconde partie de stockage (152) sont formées d'un second organe (162) ;
le second organe (162) inclut une partie de suspension (171) suspendue en dehors dudit cadre arrière (23L, 23R) ; et
ledit premier organe (161) et ledit second organe (162) sont enclenchés l'un à l'autre à la verticale dans la direction de la hauteur.

2. Motocycle selon la revendication 1, dans lequel
au moins une partie de la face inférieure (154) de ladite seconde partie de stockage (152) vient en butée sur ledit cadre arrière (23L, 23R).

3. Motocycle selon l'une quelconque des revendications 1 et 2, dans lequel
la face latérale (153) de ladite seconde partie de stockage (152) est agencée de façon à suivre la forme dudit capot de carrosserie côté arrière (50L, 50R).

4. Motocycle selon l'une quelconque des revendications 1 à 3, dans lequel
ledit coffre de stockage (142) inclut une face d'étanchéité annulaire (164) sur laquelle est placée ladite selle (15) en vue de profil du véhicule ; et
au moins une partie de la face inférieure (154) de ladite seconde partie de stockage (152) s'étend vers l'intérieur de ladite face d'étanchéité (164).

5. Motocycle selon l'une quelconque des revendications 1 à 4, dans lequel
une partie de guidage de câble de verrouillage de selle (147) permettant de guider un câble de verrouillage de selle (146) raccordé à un mécanisme de verrouillage de selle (140) est prévue dans ledit coffre de stockage (142).

6. Motocycle selon l'une quelconque des revendications 1 à 5, dans lequel
une partie formant crochet (148) s'étendant vers le haut à partir dudit second organe (162) est prévue dans ladite seconde partie de stockage (152).

7. Motocycle selon l'une quelconque des revendications 1 à 6, dans lequel
des marchepieds de selle passager (48L, 48R) fixés auxdits cadres arrière (23L, 23R) et sur lesquels ledit passager peut placer ses pieds sont agencés à l'avant du véhicule de ladite seconde partie de stockage (152).
